# EUROPEAN PATENT SPECIFICATION

(11) **EP 2 415 667 B1**
(45) Date of publication and mention of the grant of the patent: **29.04.2015**
(21) Application number: 11176017.9
(22) Date of filing: 29.07.2011
(51) Int. Cl.: B64C 3/38, B64C 3/54, F03B 17/06, F03D 3/00, F03D 3/04, F03D 3/06, F03D 5/06, F03D 7/06, F03D 11/00, F03D 11/02, F03D 3/02

(54) **Wind power generator with hinged wings**
Windkraftgenerator mit drehbaren Windmühlenflügeln
Générateur d'énergie éolienne avec des pales pivotantes

(30) Priority: 02.08.2010 KR 20100074721
(43) Date of publication of application: 08.02.2012
(73) Proprietor: Lee, In-nam, Namyangju-Si, Gyeonggi-do 472-908 (KR)
(72) Inventor: Lee, In-nam, Namyangju-Si, Gyeonggi-do 472-908 (KR)
(74) Representative: Merryweather, Colin Henry

(56) References cited:
- EP-A2- 1 536 134
- WO-A1-2006/041464
- CA-A1- 2 597 281
- DE-A1- 2 639 732
- US-A- 5 195 871
- US-A1- 2008 273 975
- US-A1- 2010 181 777

## Description

The present invention relates to a variable windmill wing wind power generator, and more particularly to, a variable windmill wing wind power generator having a power generation efficiency increasing means which can unfold the windmill wings in the wind receiving direction and unfold the windmill wings at 180° rotation direction from the wind receiving direction so as to minimize the air resistance applied to the windmill wings when rotating, thus increasing the power generation efficiency, and which can be easily installed in a plural number even in a narrow space regardless of the installation location, thus maximizing the amount of power generation per unit area and achieving the industrial purpose.

In general, the recent power generation methods include heat power generation using a large amount of fossil fuels, nuclear power generation using uranium, water power generation using a large-scaled desalination equipment, and so on. As such power generation methods are responsible for the air pollution or global warming, generate radioactive wastes difficult to dispose of, or cause huge environmental destruction, environment-friendly power generation methods demand immediate attention. Research has been actively made on solar power generation and wind power generation which are alternative environment-friendly methods. In particular, the wind power generation using the wind force has been most preferred. More attention needs to be paid to the wind power generation in Korea surrounded by the sea on three sides.

The wind power generation uses the force of wind and is a technique that a rotor is rotated using aerodynamic characteristics of kinetic energy due to floating of air and the kinetic energy is changed into mechanical energy, thus obtaining power. The wind power generator is classified with horizontal type and vertical type according to the direction of a rotation shaft to the ground and constructed by a rotator comprising wings and a hub, a speed increasing device for increasing the rotation of the rotor in order to drive a power generator, a control device for controlling the power generator and various safety devices, a hydraulic brake, a power controller, and a steel tower, as main components.

Also, the wind power generation almost never affect environment since it uses the pollution-free and unlimited wind which is scatted everywhere, can use effectively a country, and is a new energy generation technology with a level that can compete with the existing generation method in generation price in case of a large-scaled generation site.

A windmill in the wind power generator changes the kinetic energy rotated by wind into electric energy. At this time, in the windmill, about 60% of kinetic energy of the wind is changed into mechanical energy theoretically and then the mechanical energy is also changed into electric energy again, so that much energy is consumed in these processes. Accordingly, the change efficiency that wind energy is changed into electric energy has barely reached substantially about 20~30%, although there are some differences to a great or small extent according to a shape of the windmill.

In the meantime, as described above, in the convention wind power generation, there is a problem that only when the wind is maintained over a constant speed and the air density is high, kinetic energy of the wind is delivered to wings and then the windmill is rotated, thereby changing the kinetic energy of the wind into electric energy. That is, if the wind is weak or when the gentle wind rises, the rotation of the windmill becomes weak, so the wind power generation is impossible.

Especially, in the conventional wind power generator, when wings of the windmill are rotated by 180 degrees from the wind receiving direction, the rotation of the windmill is blocked due to the resistance of wind or air and thus the power generation efficiency decreased.

In order to solve the foregoing problems, Korean Patent Publication No. 10-2009-56280 titled by "Windmill for wind power generator with variable type wings" has been disclosed in the Korean Patent Publication Gazette.

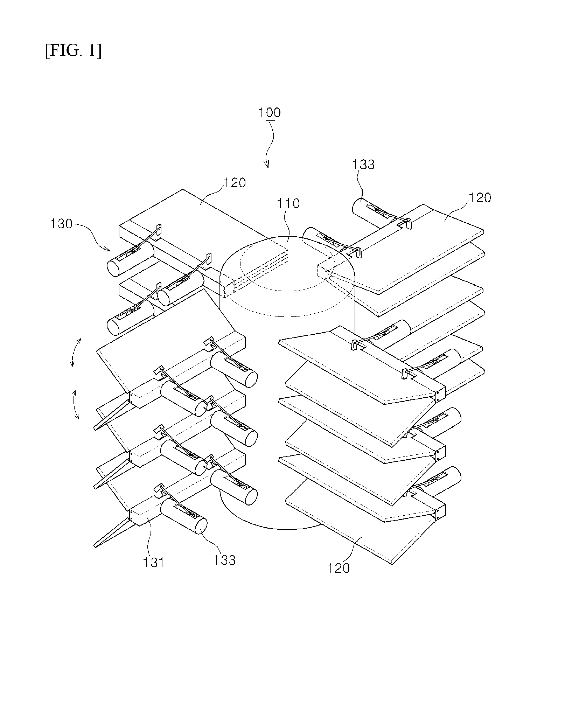

According to the Korean Patent Publication No. 10-2009-56280 titled by "Windmill for wind power generator with variable type wings", as illustrated in FIG. 1, the windmill for wind power generator with variable type wings includes a case 110 coupled to a rotor rotating shaft of the power generator and then rotated together; wings 120 installed with a constant interval along circumferential longitudinal directions of the case 110 in order to be rotated the case 110 by wind, and folded and unfolded by the force of wind; a bracket 13 installed to the case 110 including the wings 120 rotatably installed through a hinge H and a driving member 130 for pivoting the wings 120 which are easily folded and unfolded according to the wind receiving direction; a cylinder 133 installed at the bracket 131 and having an operating space 133a formed at the inside thereof; a piston 135 built in the operating space 133a and moved by a linear motion; a tension spring 137 built in the operating space 133a in which the piston 135 is elastically supported to the direction of the wings 120; and a link 139 in which an end thereof is connected to the wings 120 and the other end thereof is connected to the piston 135, wherein when the front surface 121 of the wing 120 which has been unfolded is faced with the wind blowing direction by the rotation of the windmill, the wing 120 is unfolded, and when the rear surface 123 of the wing 120 is faced with the wind blowing direction, the wing 120 is pivoted and folded rapidly from the bracket 131 by the wind force and elasticity of the tension spring 127, so that the wind force transmitted to the wing 120 is lowered and so the rotation force of the windmill 100 is increased.

However, the Korean Patent Publication No. 10-2009-56280 titled by "Windmill for wind power generator with variable type wings" has several disadvantages: although the wings 120 are folded or unfolded by the blowing wind, the wings 120 are moved by 90 degrees and then folded and unfolded and this has caused the cases that the wings are not folded or unfolded well, as well as the increase of the power generation efficiency did not meet the expectations because an elastic force of the tension spring 137 for folding and unfolding the wings acts on as a force that blocks rotation of the windmill 100.

Also, the Korean Patent Publication No. 10-2009-56280 titled by "Windmill for wind power generator with variable type wings" has a disadvantage: it is difficult to perform a maintenance because it is not equipped with a means for repairing a breakdown separately. That is, when any one among plural wings does not work due to a breakdown, the windmill 100 is rotated by wind, so it is difficult to repair the broken wing after stopping the windmill 100.

Also, there is a problem: the conventional wind power generator performs the power generation by rotating a turbine regardless of the strength of wind and so although the wind is really strong, the amount of power generation cannot be increased.

Therefore, the present invention has been made to solve various shortcomings and problems associated with the conventional general wind power generator, and an object of the present invention is to provide a variable windmill wing wind power generator having a power generation efficiency increasing means which can operate by a gentle wind having a low velocity regardless of the direction of the wind and increase the number of turbines for performing power generation according to the strength of wind.

US-5,195,871, which represents the closest prior art, discloses a variable windmill wing wind power generator having a power generation increasing means, comprising: an installation mount stood on the floor in the shape of a cross and having a vertical rotating shaft holder in a central portion thereof and a vertical rotating shaft rotatably and uprightly installed in the central portion of the installation mount; a bearing into which a top end of the vertical rotating shaft is rotatably inserted; '['-shaped holders connected and fixed between the bearing and the installation mount; a plurality of inner wing installation units fixedly installed on the vertical rotating shaft at given intervals in the up/down direction; a plurality of outer wing installation units; windmill wings installed between the inner wing installation units and the outer wing installation units; vertical support rods connecting the outer wing installation units of groups of adjacent windmill wings in the up/down direction; and a power generation means for performing power generation.

EP 1 536 134 A2 discloses a generator unit for a power turbine comprising a driven shaft, at least one electric generator and at least one friction wheel engaging drive pinions on the generators. This document discloses that different power levels can be achieved by combining multiple generators of different powers. The number of generators used depends on the wind speed and is controlled by means of friction wheels to couple or uncouple drive pinions. A controllable drive drives the friction wheels.

According to the present invention there is provided a variable windmill wing wind power generator comprising: an installation mount stood on the floor in the shape of a cross (+) and having a vertical rotating shaft holder in a central portion thereof; a vertical rotating shaft rotatably and uprightly installed in the central portion of the installation mount; a bearing into which a top end of the vertical rotating shaft is rotatably inserted; '['-shaped holders connected and fixed between the bearing and the installation mount; a plurality of inner wing installation units fixedly installed on the vertical rotating shaft at given intervals in the up/down direction; support rods having one-side ends fixed to the inner wing installation units; a plurality of outer wing installation units to which outer ends of the support rods are fixed; windmill wings installed between the inner wing installation units and the outer wing installation units; vertical support rods made of a steel wire and connecting the outer wing installation units of groups of windmill wings that are adjacent in the up/down direction; a plurality of support bars made of a steel wire and connected between the highest support rod and the lowest support rod of the windmill wings of the respective groups; support units installed on the vertical rotating shaft between the groups of the windmill wings, and connected to the '['-shaped holders; windmill wing fixing means installed on the vertical rotating shaft above the inner wing installation units to be movable in the up/down direction and fixing displacements of the windmill wings; fixing means driving device; and characterized in that the generator further comprises: support rings made of a steel wire and connected to the outer wing installation units on the same plane; a plurality of diagonal support bars connected and fixed between upper outer wing installation units and lower inner wing installation units of the windmill wings of the same group; a ladder fixed to the support rods of the windmill wings of each group; a plurality of turbines for performing power generation; and a power generation efficiency increasing means installed at the lower center portion of the installation mount, the plurality of turbines being installed on the bottom portion of the power generation efficiency increasing means, the power generation efficiency increasing means being arranged to change the number of turbines engaged with the vertical rotating shaft according to the strength of wind; wherein the support units are connected to the '['-shaped holders through wires; the fixing means driving device is installed on the bottom end side of the vertical rotating shaft; and wherein the power generation efficiency increasing means comprises: a circular plate shape switch driving means installed at a support shaft, which installed uprightly and separately adjacent to the vertical rotating shaft, by a bracket; a rudder connected and installed to the switch driving means, wherein it is rotated according to the wind blowing direction to receive the wind direction frontally; a switch having a wind receiving wing which is installed at a lower portion of the switch driving means and turned on or off according to the strength of wind; a driving gear connected with a lower end of the vertical rotating shaft within a housing equipped to a lower end portion of the vertical rotating shaft; a first driven gear engaged with the driving gear; a second and a third driven gears installed adjacent to the driving gear and engaged with the driving gear according to the strength of wind; and an air compressor for pushing all or any one among the first to the third driven gears to the driving gear through the respective linear actuators according to the contact point state of the switch so as to be engaged with the driving gear, wherein optionally the switch comprises a wind receiving wing, a right side contact roller contacted to the right outer circumferential edge of the switch driving means, and a left side contact roller contacted to the left outer circumferential edge of the switch driving means, arranged so that when the strength of wind becomes the constant strength, the right outer circumferential edge of the switch driving means pushes the right contact roller and is switched, and when the strength of wind becomes stronger, the left outer circumferential edge of the switch driving means pushes the left contact roller and is switched.

According to the present invention, the variable windmill wing wind power generator having a power generation efficiency increasing means can operate by a gentle wind having a low velocity regardless of the direction of the wind and drive a plurality of power generation means according to the strength of wind, thus increasing the power generation efficiency.

In addition, the hereinafter described embodiments of the present invention can achieve the following advantages.

The variable windmill wing wind power generator can fold the windmill wings in the wind receiving direction and unfold the windmill wings when they are rotated by 180° from the wind receiving direction so as to minimize a resistance force exerted on a rotary force of a windmill shaft, thus increasing the power generation efficiency.

Moreover, the variable windmill wing wind power generator can simplify the manufacturing process by the simple structure and be installed in a plural number in various places regardless of the installation location, thus maximizing the amount of power generation per unit area, achieving the industrial purpose, and generating electricity in the environment-friendly fashion without causing pollution such as greenhouse gas.

Also, the variable windmill wing wind power generator can be installed in strong as a group with up/down multi-stages, stop easily the rotation operation of the windmill wings according to need, and reach easily a troubleshooter at the position of corresponding windmill wing which needs to repair, thus performing a follow-up control of maintenance conveniently.

Hereinafter, a variable windmill wing wind power generator having a power generation efficiency increasing means according to preferred embodiments of the present invention will be described in detail with reference to the accompanying drawings, in which:
FIG. is a perspective view illustrating a construction of a windmill for a conventional wind power generator having variable wings;

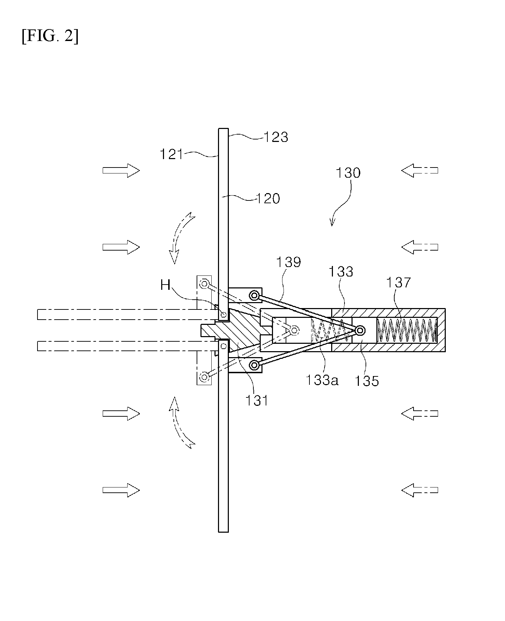

FIG.2 is a cross-sectional view illustrating a construction of wings and a driving member installed at a windmill for a conventional wind power generator having variable wings;

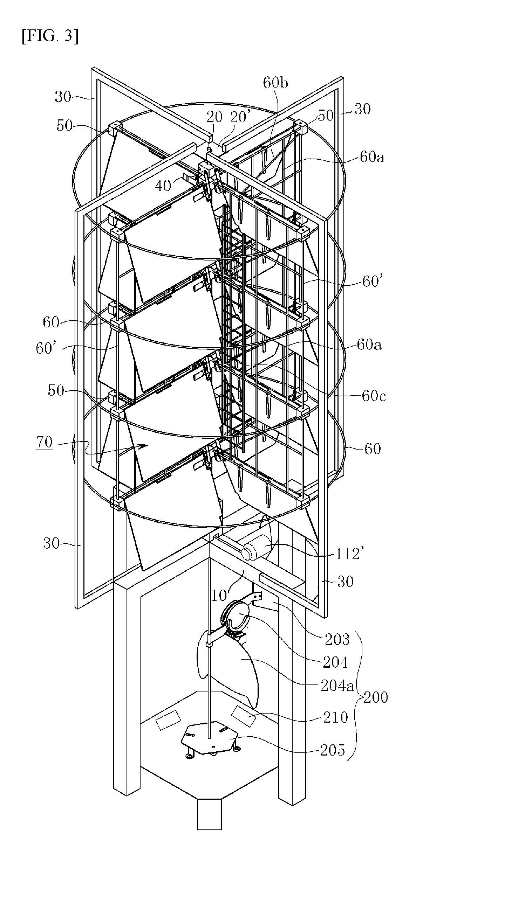

FIG.3 is a perspective view of a variable windmill wing wind power generator having a power generation efficiency increasing means according to the present invention;
FIG. 4a is a perspective view illustrating an installation state of the windmill wings according to the present invention which are rotated in the clockwise direction;
FIG. 4b is a perspective view illustrating an installation state of the windmill wings according to the present invention which are rotated in the counterclockwise direction;
FIG. 5 is a view illustrating a construction of a support bar connected and installed in the same plane within the same group according to the present invention;
FIG. 6 is an exploded view of major parts of a variable windmill wing wind power generator having a power generation efficiency increasing means according to the present invention;
FIG. 7a is a perspective view of an inner wing installation unit and a moving unit according to another embodiment of the present invention;
FIG. 7b is a view of a multi-stage arrangement state of inner wing installation units and moving units in each group of the windmill wings according to the present invention;

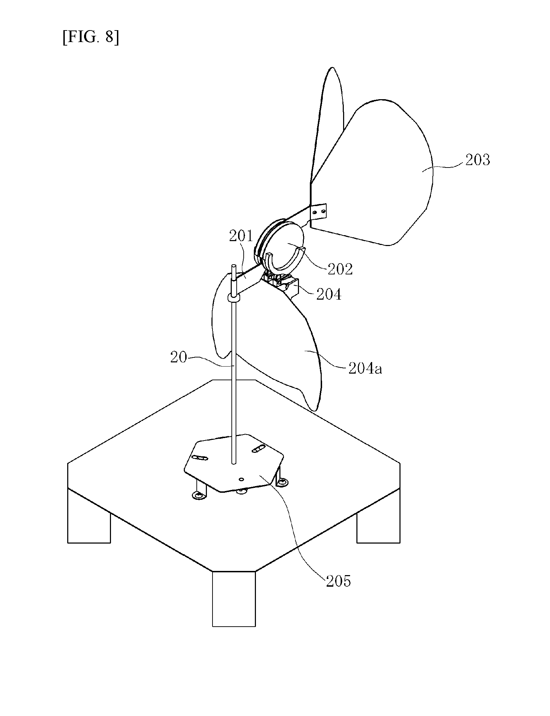

FIG. 8 is a perspective view of a power generation efficiency increasing means according to the present invention;
FIGS. 9a to 9c are plan views illustrating a gear arrangement state of a power generation efficiency increasing means according to the present invention;
FIGS. 10a to 10c are views explaining an operation of a power generation efficiency increasing means according to the present invention;
FIG. 11a is a view illustrating energy efficiency and energy loss rate of a variable windmill wing wind power generator having a power generation efficiency increasing means according to the present invention;
FIG. 11b is a view illustrating a degree of energy efficiency of a variable windmill wing wind power generator having a power generation efficiency increasing means according to the present invention;
FIG. 12 is an explanatory view of the relation of interaction in the rotation efficiency between upper and lower groups;
FIG. 13a is a view illustrating power generation efficiency according to the wind speed of a conventional wind power generator;
FIG. 13b is a view illustrating power generation efficiency of a variable windmill wing wind power generator having a power generation efficiency increasing means according to the present invention;
FIG. 14a is a view illustrating a fixing means driving device according to the present invention, when the windmill wings rotate;
FIG. 14b is a view illustrating the fixing means driving device according to the present invention, when the rotation of the windmill wings is stopped;

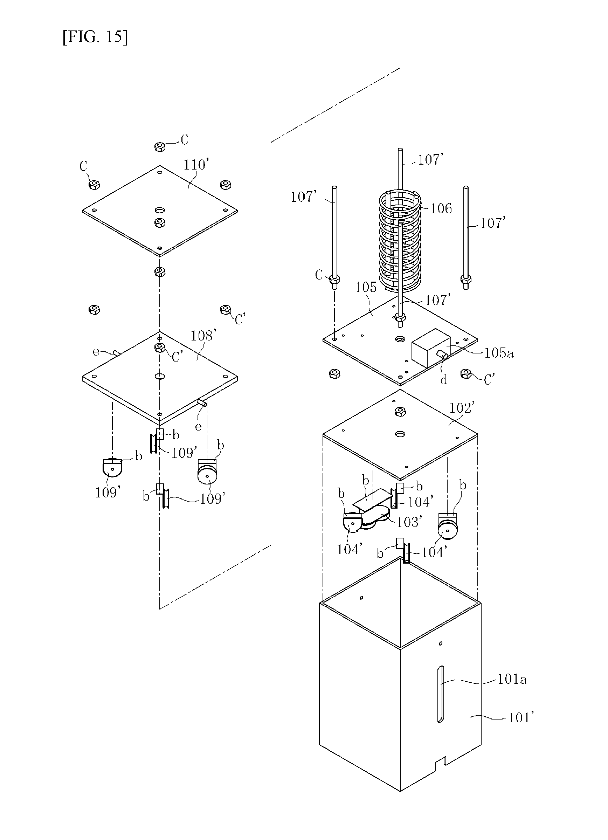

FIG. 15 is a perspective view of a fixing means driving device according to the present invention;

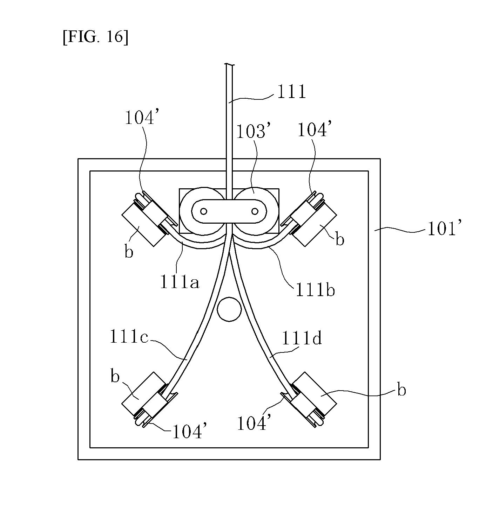

FIG. 16 is a bottom view of a fixing means driving device according to the present invention;
FIG. 17a is an explanatory view of an operating state of the windmill wing fixing means according to the present invention, when the windmill wings rotate;
FIG. 17b is an explanatory view of an operating state of the windmill wing fixing means according to the present invention, when the rotation of the windmill wings is stopped;
FIG. 18a is a view of an operating state of the windmill wing fixing means according to the present invention, when the windmill wings rotate;
FIG. 18b is a view of an operating state of the windmill wing fixing means according to the present invention, when the rotation of the windmill wings is stopped;
FIG. 19a is a view of a state of the windmill wings displaced by the operation of the windmill wing fixing means according to the present invention, when the windmill wings rotate;
FIG. 19b is a view of a state of the windmill wings displaced by the operation of the windmill wing fixing means according to the present invention, when the rotation of the windmill wings is stopped; and
FIG. 20 is a schematic plan view of the flow of the wind between the windmill wings, when the variable windmill wing power generator having a power generation efficiency increasing means according to the present invention is installed in a plural number.
FIG. 21 is a comparative view of the installation state of the windmill wings between the conventional wind power generator and the wind power generator according to the present invention; and
FIG. 22 is a comparative view of the use efficiency of the installation land between the conventional wind power generator and the wind power generator according to the present invention.

A variable windmill wing wind power generator A having a power generation efficiency increasing means according to the present invention includes: an installation mount 10 stood on the floor in the shape of a cross (+) and having a vertical rotating shaft holder in a central portion thereof; a vertical rotating shaft 20 rotatably and uprightly installed in the central portion of the installation mount 10; a bearing 20' into which a top end of the vertical rotating shaft 20 is rotatably inserted; '['-shaped holders 30 connected and fixed between the bearing 20' and the installation mount 10; a plurality of inner wing installation units 40 fixedly installed on the vertical rotating shaft 20 at given intervals in the up/down direction; support rods 40' having one-side ends fixed to the inner wing installation units 40; a plurality of outer wing installation units 50 to which outer ends of the support rods 40' are fixed; support rings 60 made of a steel wire and connected to the outer wing installation units 50 on the same plane; vertical support rods 60' made of a steel wire and connecting the outer wing installation units 50 of the same group in the up/down direction, the upper and lower outer wing installation units 50 being grouped in the up/down multi-stage fashion; a plurality of support bars 60a made of a steel wire and connected between the highest support rod 40' and the lowest support rod 40' within the same group; a plurality of diagonal support bars 60b connected and fixed between upper outer wing installation units 50 and lower inner wing installation units 40 within the same group; a ladder 60c' fixed to the support rod 40' of each stage; windmill wings 70 installed between the inner wing installation units 40 and the outer wing installation units 50 in the up/down multi-stage fashion; support units 80 installed on the vertical rotating shaft 20 between the groups of the windmill wings 70 made in the up/down multi-stage fashion, and connected to the '['-shaped holders 30 through wires 81; windmill wing fixing means 90' installed on the vertical rotating shaft 20 above the inner wing installation units 40 to be movable in the up/down direction and fixing displacements of the windmill wings 70; fixing means driving device 100' installed on the bottom end side of the vertical rotating shaft 20; a power generation efficiency increasing means 200 installed at the lower center portion of the installation mount 10 so as to be changed the number of power generation turbines according to the strength of wind; and a plurality of power generation means 300 installed on the bottom portion of the power generation efficiency increasing means 200 and for performing power generation.

Each of the inner wing installation units 40 is divided into an installation unit 40a and an installation unit 40b, which are coupled to each other by a bolt 41, the ends of the support rods 40' are inserted into the inner wing installation unit 40 in the horizontal direction from the front, rear, left and right directions and fixed thereto by a bolt 42 downwardly inserted from the top surface, the ends of wing rotating shafts 71 are rotatably inserted into the inner wing installation units 40 on the same plane as the support rods 40', the ends of rotating shafts 96 of the windmill wing fixing means 90' are rotatably inserted into the inner wing installation units 40 below the inserted portions of the support rods 40' and the wing rotating shafts 71, the other ends of the support rods 40' are inserted into and fixed to the outer wing installation units 50, and the respective other ends of the wing rotating shafts 71 and the rotating shafts 96 are rotatably inserted into the outer wing installation units 50.

Each of the windmill wings 70 includes a wing rotating shaft 71 rotatably installed between the inner wing installation unit 40 and the outer wing installation unit 50 on the same plane as the support rod 40', a wing part 72 having one side fixed to the wing rotating shaft 71, and a wing spring 73 inserted into a central portion of the wing rotating shaft 71 and maintaining the wing part 72 at 45° from the horizontal surface during non-operation.

Here, the wing parts 72 are preferably made of a material having a light weight and a high density, and thus made of any one selected from the group consisting of transparent or opaque reinforced plastic, strengthened glass, non-ferrous metal, and duralumin.

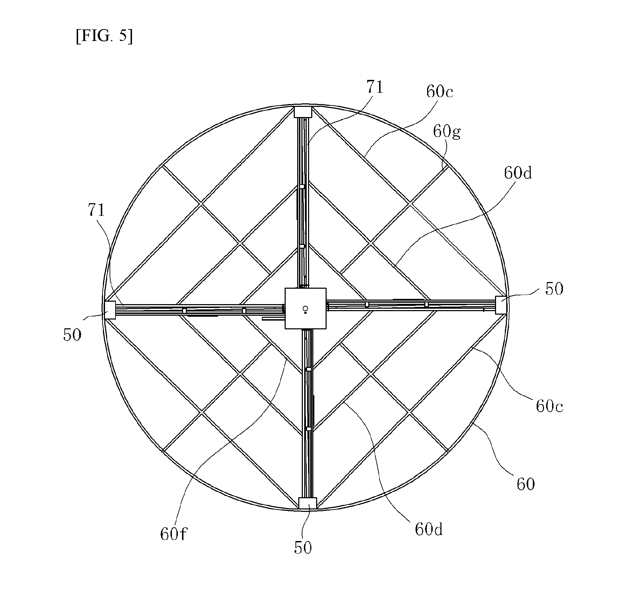

As shown in FIG. 5, the wing rotating shafts 71 located on the same plane within the same group are connected with plural steel wire support bars 60c, 60d and 60f, and plural steel wire support bars 60c are connected and fixed between the support ring 60. Also, the support bar 60c and the support bar 60d, and the support bar 60f and the support ring 60 are connected with each other by support bars 60g.

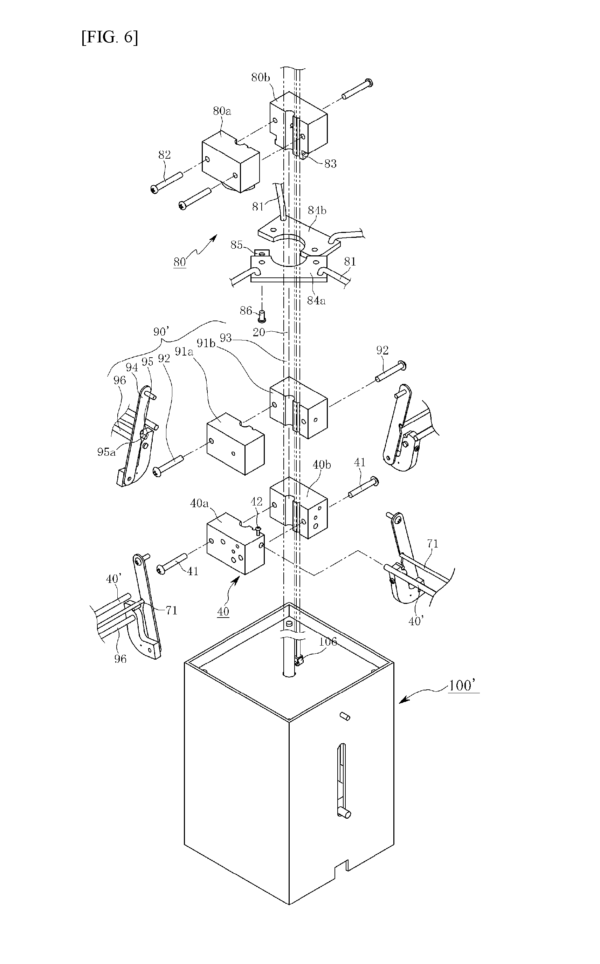

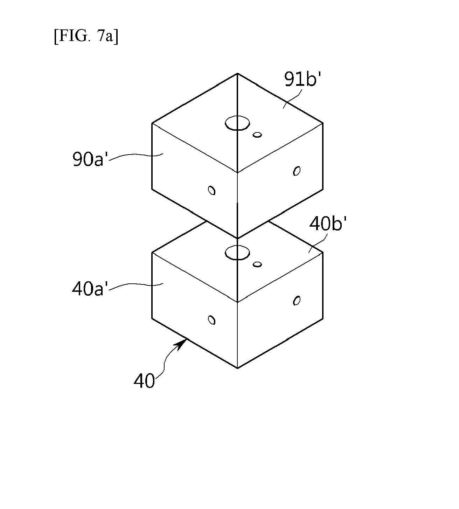

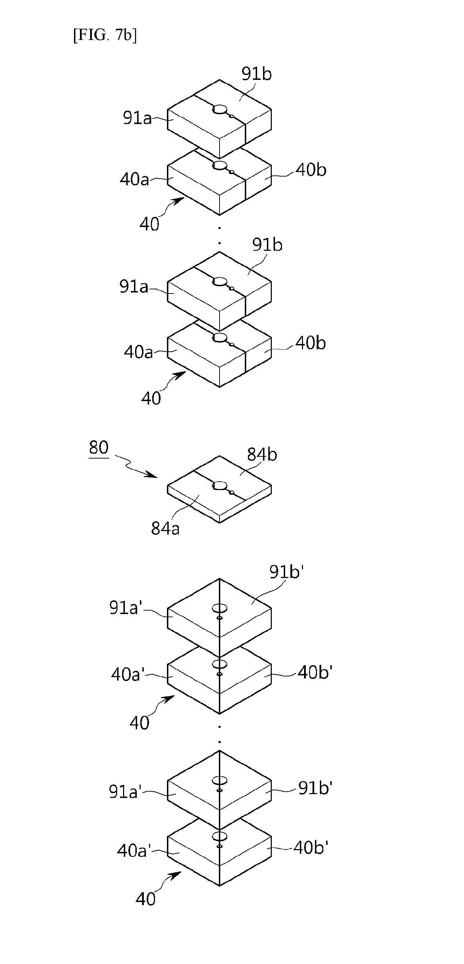

The inner wing installation units 40 are divided into a structure in which the cutting side of the central portion for dividing the installation unit 40 into the installation unit 40a and the installation unit 40b is parallel to the outer side as shown in FIG.6 and a structure in which the cutting side for dividing the installation unit 40 into the installation unit 40a' and the installation unit 40b' is diagonal as shown in FIG.7a. In addition, the moving units are divided into a structure in which the cutting side of the central portion for dividing the moving unit into the moving unit 91a and the moving unit 91b is parallel to the outer side as shown in FIG.6 and a structure in which the cutting side for dividing the moving unit into the moving unit 91a' and the moving unit 91b' is diagonal as shown in FIG.7a. Referring to FIG.7b, the installation units and the moving units are alternately installed so that the groups located over the support units 80 can be the groups in which the cutting surfaces are parallel to the outer side and the groups located below the support units 80 can be the groups in which the cutting surfaces are diagonal (or so that the groups located over the support units 80 can be the groups in which the cutting surfaces are diagonal and the groups located below the support units 80 can be the groups in which the cutting surfaces are parallel to the outer side). Therefore, the wing part 72 of one group which corresponds to the wing part 72 receiving the wind in the vertical direction among the wing parts 72 of the windmill wings 70 of the other group is more or less rotated than the wing part 72 receiving the wind in the vertical direction by 45°. In each group, whenever the wing rotating shafts 71 of the windmill wings 70 are rotated by 90°, the wing parts 72 receive the wind in the vertical direction. However, in terms of the entire groups, whenever the wing rotating shafts 71 are rotated by 45°, the wing parts 72 of the groups alternately receive the wind in the vertical direction.

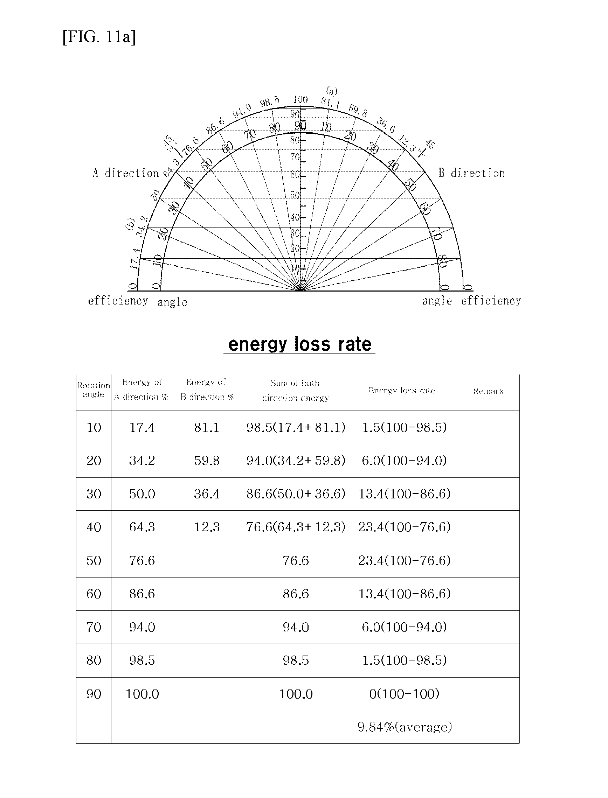

That is, as shown in FIG. 11a, if the wing parts 72 of a first group receive the wind in the vertical direction and the strength of wind is 100, when a wing part 72 is rotated by 10° and then located at the position of (a), the subsequent wing part 72 is located at the position of (b). Therefore, the wing part 72 located at the position of (a) receive the strength of wind corresponding to the value obtained by deducting the value that the wind is blocked by the wing part 72 located at the position of (b) from the value given as cosine x (x is an angle). Also, the wing part 72 located at the position of (b) receive the strength of wind corresponding to the value given as sine x (x is an angle).

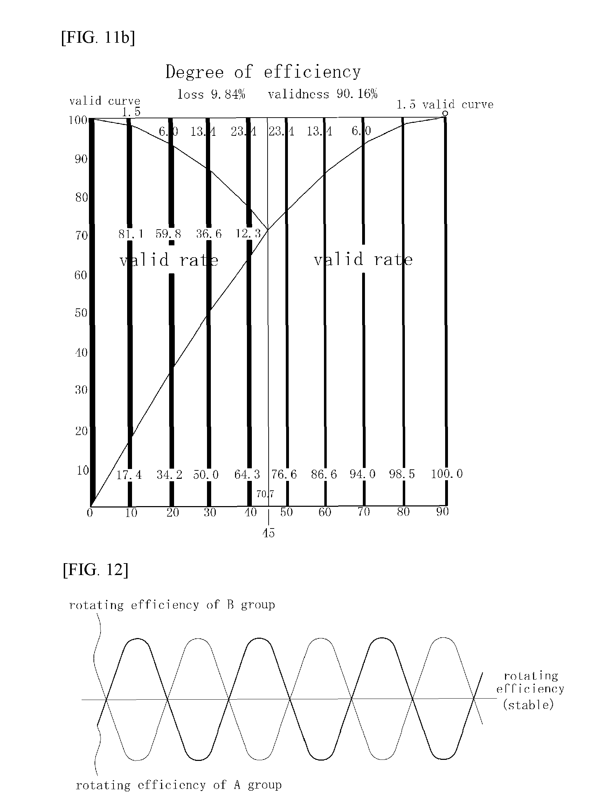

Accordingly, the strength of wind which the wing part 72 located at the position of (b) receives is 17.4 as sine 10° and the strength of wind which the wing part 72 located at the position of (a) receives is 98.5-17.4=81.1 as cosine 10° -17.4, so the sum of energy of two wing parts is 98.5 and thus the energy loss rate is 1.5(that is, 100-98.5). Like this, the entire energy efficiency and energy loss rate according to the rotation of wing parts 72 of each group are shown in FIG. 11a and the energy efficiency degree is shown in FIG. 11b, thus the power generation efficiency is enhanced.

Also, when the strength of the wind which a wing part 72 in one group (A group) receives become maximum, the strength of the wind which a wing part 72 in the other group (A group) receives become minimum, and therefore, the rotation efficiency of the vertical rotary shaft 20 by the wing part 72 of A group and the rotation efficiency of the vertical rotary shaft 20 by the wing part 72 of B group are offset, as shown in FIG. 12, and thus a constant stable rotation efficiency can be obtained.

Moreover, each of the support units 80 is divided into a support body 80a and a support body 80b, which are coupled to each other by a bolt 82, support plates are inserted into bottom circular projection portions 83 formed by the coupling of the support body 80a and the support body 80b, each of the support plates is divided into a support plate 84a and a support plate 84b so that one support plate forms a hinge structure and the other support plate is coupled to a bolt 86 through the medium of a bracket 85, the ends of the wires 81 are fixed to four edges of the coupled support plates 84a and 84b, and the other ends of the wires 81 are connected and fixed to the '['-shaped holders 30.

Here, the support bars 60c, 60d, 60f, 60g, and 60a, diagonal support bars 60b, outer wing installation units 50, support rings 60, wing rotary shafts 71, support bars 60h, and inner wing installation units 40 have the dimension as the following table 1, preferably.

**[Table 1] Dimension of components of wind power generator**

| Reference numerals of drawing | Length (cm) | number | radius | Circular constant | Specific gravity | Weight (kg) | Total length (cm) |
|---|---|---|---|---|---|---|---|
| 60c | 630 | 4 | 1² | 3.14 | 7.85 | 62.11 | 2520 |
| 60d | 420 | 4 | 1² | 3.14 | 7.85 | 41.41 | 1680 |
| 60f | 210 | 4 | 1² | 3.14 | 7.85 | 20.70 | 840 |
| 60g | 340 | 4 | 1² | 3.14 | 7.85 | 33.52 | 1360 |
| 60a | 310 | 12 | 1² | 3.14 | 7.85 | 91.69 | 3720 |
| 60b | 550 | 4 | 1² | 3.14 | 7.85 | 54.22 | 2200 |
| 50 | 450 | 4 | 1.5² | 3.14 | 7.85 | 99.82 | 1800 |
| 60 | 2826 | 4 | 1.5² | 3.14 | 7.85 | 156.73 | 2826 |
| 71 | 450 | 8 | 1² | 3.14 | 7.85 | 85.68 | 3600 |
| 60h | 1,000 | 4 | 0.5² | 3.14 | 7.85 | 24.69 | 4000 |
| 40 | 310 | 1 | 4² | 3.14 | 7.85 | 122.25 | 310 |

As shown in the table 1, the support bodies, as various installation materials, including a plurality of support bars 60a for supporting the wind power generator A, a plurality of diagonal support bars 60b, support bars 60c,60d,60f,60g, and 60h, and support rings 60 can be made to have a light weight and the reason is as follows.

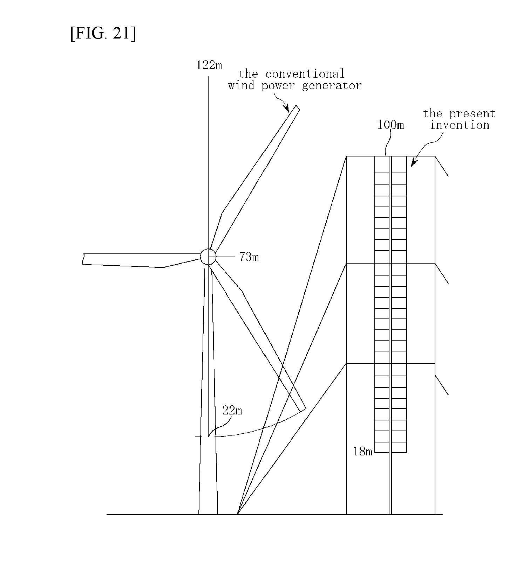

That is, as shown in FIG. 21, according to the conventional wind power generator, the windmill wings with heavy weight are fixed only at the center portion and thus an enormous force is acted by the principle of leverage of the windmill wings at the connection portion of the windmill wings. Therefore, a specific connection construction is required: a connection area of the connection portion must be increased especially. According to the present invention, the center of gravity of the windmill wings in the wind power generator A is spread and thus the supporting force of the windmill wings 70 is spread to a plurality of support bodies such as a plurality of support bars 60a, a plurality of diagonal support bars 60b, support bars 60c, 60d, 60f, 60g, and 60h, and support rings 60c and so on. Accordingly, the installation materials including the respective supporting bodies can be made to have a light weight and so the cost of materials can be reduced.

Together with the spreading of the support force, the supporting bodies are constructed by a circular plane type, as shown in FIG. 5. According to the present invention, the windmill wings 70 located at a group of the wind power generator A (for example, the windmill wings of A group) are installed and then the windmill wings of B group can be easily installed on the windmill wings 70 of A group like an assembly type by using the circular plane of FIG.5 formed by support bodies of A group as a foothold. Accordingly, a tower crane required at the conventional installation work is unnecessary and thus the required installation cost can be reduced drastically.

Each of the windmill wing fixing means 90' is divided into the moving unit 91a and the moving unit 91b, which are coupled to each other by a bolt 92 so that the moving unit 91a and the moving unit 91b can move in the up/down direction with the vertical rotating shaft 20 inserted into a central portion thereof, a moving shaft 93 for moving the moving unit 91a and the moving unit 91b in the up/down direction is inserted and fixed between the moving unit 91a and the moving unit 91b, the ends of the straight lever 94 are fixed to outer surfaces of the coupled moving units 91a and 91b, respectively, the ends of'L'-shaped levers 95 are rotatably connected to the other ends of the straight levers 94, rotating shafts 96 provided with springs 96a are inserted into the other ends of the 'L'-shaped levers 95 and rotatably inserted into the inner wing installation units 40, stopper pins 95a for stopping rotation of the 'L'-shaped levers 95 are inserted into and fixed to the inner wing installation units 40 on which the other ends of the 'L'-shaped levers 95 are located, the springs 95a have the ends mounted on and fixed to the support rods 40' and the other ends fixed on the 'L'-shaped levers adjacent to the connection portions of the straight levers 94 and the 'L'-shaped levers 95, and a plurality of levers 97 are fixed on the rotating shafts 96 at given intervals.

Also, the fixing means driving device 100' includes: a rectangular box body 101'; a lower fixing plate 102' fixed to a lower portion in the rectangular box body 101'; a pair of rollers 103' installed at a lower side of the lower fixing plate 102'; lower rollers 104' installed at every lower side corner of the lower fixing plate 102'; a lower moving plate 105' moved upwardly and downwardly in the rectangular box body 101'; a spring 106' inserted into the upper side center of the lower moving plate 105'; a plurality of moving shafts 107' fixed uprightly at the corner of the lower moving plate 105'; an upper fixing plate 108' fixed to an upper portion in the rectangular box body 101'; upper rollers 109' installed at every lower side corner of the upper fixing plate 108'; an upper moving plate 110' fixed at an upper end of a plurality of moving shafts 107'; a rope means 111' comprising ropes 111a ~ 111d which is hung the rollers 103' and upper and lower rollers 109' and 104'; and a motor 112' for winding and unwinding the rope means 111'.

The rectangular box body 101' includes a guide groove 101a, which has oblong shapes at upper and lower portions thereof, formed at a side of the rectangular body. The lower fixing plate 102' is fixed to a lower portion of the rectangular box body 101' by a '¬'-shaped bracket a. The rollers 103' and 104' are fixed to a lower side of the lower fixing plate 102' by a bracket b. The lower end of the moving shaft 107' is fixed to the corner of the lower moving plate 105' by nuts c and c' and the upper end of the moving shaft 107' is fixed to the upper moving plate 110' by nuts c and c'. A guide member 105a having a guide protrusion d is fixed at an upper side end of the lower moving plate 105' and the guide protrusion d is inserted into the guide groove 101a. A fixing bolt e is formed at a side of the upper fixing plate 108' and inserted and fixed into a side of the rectangular box body 101', and an upper roller 109' is fixed to a lower side of the upper fixing plate 108' by a bracket b.

Also, the power generation efficiency increasing means 200 includes: a circular plate shape switch driving means 202 installed at a support shaft, which installed uprightly and separately adjacent to the vertical rotating shaft 20, by a bracket 201; a rudder 203 connected and installed to the switch driving means 202, wherein it is rotated according to the wind blowing direction to receive the wind direction frontally; a switch 204 having a wind receiving wing 204a which is installed at a lower portion of the switch driving means 202 and turned on or off according to the strength of wind; a driving gear 206 connected with a lower end of the vertical rotating shaft 20 within a housing 205 equipped to a lower end portion of the vertical rotating shaft 20; a first driven gear 207 engaged with the driving gear 206; a second and a third driven gears 208 and 209 installed adjacent to the driving gear 206 and engaged with the driving gear 206 according to the strength of wind; and an air compressor 210 for pushing all or any one among the first to the third driven gears 207,208, and 209 to the driving gear 206 through the respective linear actuators according to the contact point state of the switch so as to be engaged with the driving gear 206 .

The switch 204 includes a wind receiving wing 204a, a right side contact roller 204b contacted to the right outer circumferential edge of the switch driving means 202, and a left side contact roller 204b' contacted to the left outer circumferential edge of the switch driving means 202. When the strength of wind becomes the constant strength, the right outer circumferential edge of the switch driving means 202 pushes the right contact roller 204b and is switched. When the strength of wind becomes stronger, the left outer circumferential edge of the switch driving means 202 pushes the left contact roller 204b' and is switched. That is, the left and right outer circumferential edges of the switch driving means 202 are protruded with a constant angle and thus the protrusions push the left and right contact rollers 204b' and 204b downwardly so that the switching of the switch 204 is performed.

Also, the power generation means 300 includes power generators 301,302, and 303 installed at the lower portions of the first to third driven gears 207, 208, and 209 engaged with the driving gear 206, respectively.

The reason for dividing the support unit 80 into the support body 80a and the support body 80b, the support plate into the support plate 84a and the support plate 84b, the windmill wing fixing means 90' into the moving unit 91a and the moving unit 91b or the moving unit 91a' and the moving unit 91b', and the inner wing installation unit 40 into the installation unit 40a and the installation unit 40b or the installation unit 40a' and the installation unit 40b' is because a corresponding broken part can be easily replaced and repaired in the event of a failure.

Here, preferably, so as to increase the generated power, the windmill wings 70 are installed in the up/down n-stage, the wind power generator A having the up/down n-stage windmill wings 70 is installed in a plural number in the front/rear and left/right horizontal directions, and the power generation means 300 of the respective wind power generations A are electrically connected with each other, so that power generated by each power generation means 300 is combined.

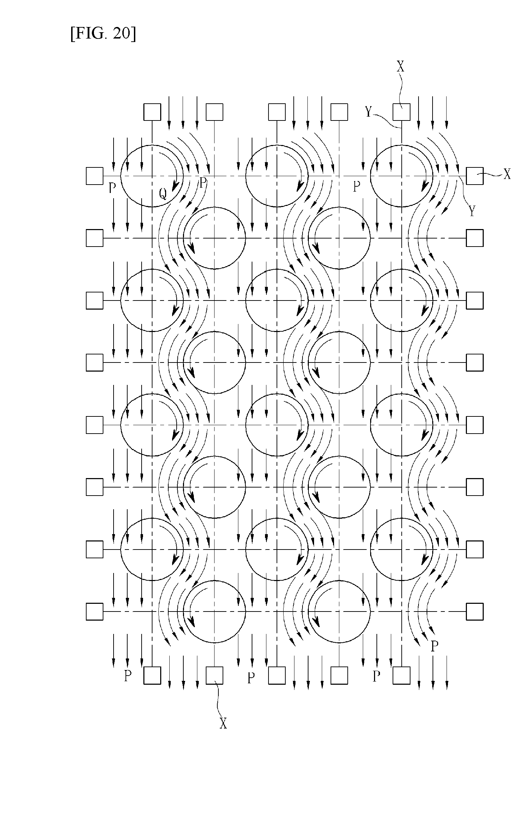

In addition, when the plurality of wind power generators A having the up/down n-stage windmill wings 70 are installed in the front/rear and left/right horizontal directions, as illustrated in FIG. 20, although a plurality of pillars X are vertically installed on front/rear and left/right outer portions, and connected and fixed to the bearing portions 20' of the respective wind power generators A by wires Y, the wind power generators A do not hide the sunlight. Accordingly, the wind power generator A can be installed on a building, farmland, forest land, or marine farm, and thus is not limited in the installation location.

Next, the operation of the variable windmill wing wind power generator having the power generation efficiency increasing means with the above-described construction according to the present invention will be described in detail.

In the wind power generator A according to the present invention, the windmill wings 70 opposite to the wind blowing direction are pushed by the blowing wind, so that the wing parts 72 are suspended on the levers 97, receive the wind in the vertical state, and thus push the support rods 40'. Therefore, the wing parts 72 receiving the wind rotate the vertical rotating shaft 20 through the wing rotating shafts 71, thereby generating power.

Here, as the wing parts 72 rotated upon the rotation of the vertical rotating shaft 20 by 90° from the vertical surface orthogonal to the direction of the wind rotated again, the wing parts 72 are lifted to the horizontal state due to the resistance force of the air, and thus do not receive the resistance of the air. As the vertical rotating shaft 20 rotates, the wing parts 72 rotate again. The wing parts 72 rotated by 270° from the vertical surface orthogonal to the direction of the wind rotate again, and thus maintain 45° from a horizontal surface by the wing spring 73. In this situation, if the wing parts 72 rotate again, they are pushed again by the blowing wind, suspended on the levers 97, receive the wind in the vertical state, and push the wing rotating shafts 71, so that the vertical rotating shaft 20 is continuously rotated to generate power.

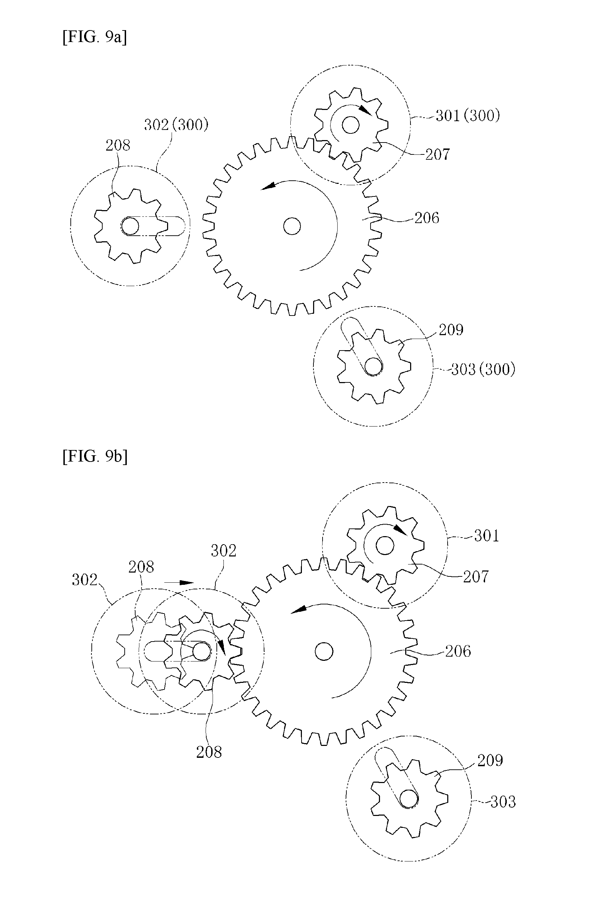

Also, as the strength of wind increases, so does the number of generators. When the strength of wind is constant, as shown in FIG. 9a, the first driven gear 207 is engaged with the driving gear 206 connected with the vertical rotating shaft 20 and so the generator 301 connected at the lower portion of the first driven gear 207 is generated by rotating the vertical rotating shaft 20.

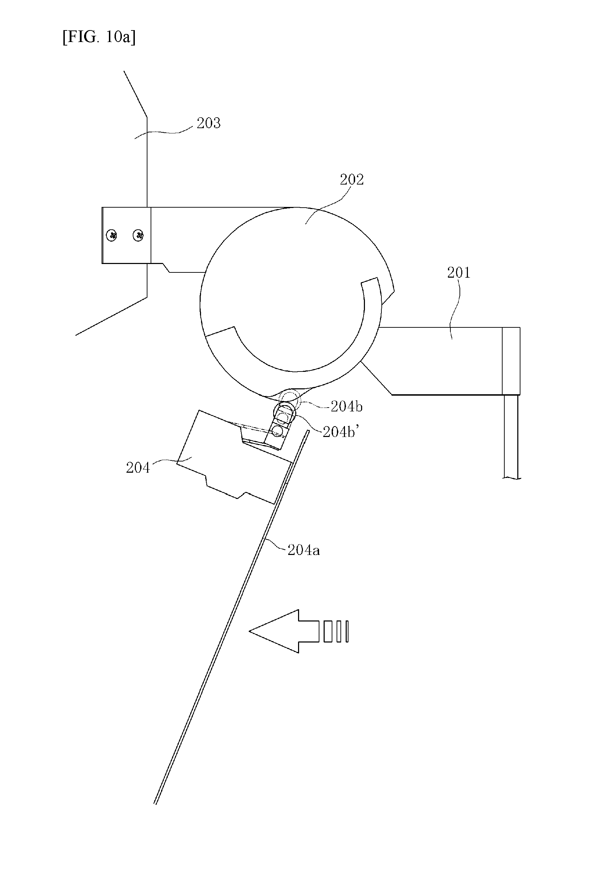

In the state that the generator 301 is only generated, when the wind exceeds a constant speed per second, as shown in FIG. 10a, a wind receiving wing 204a is pushed to the rear, so left and right contact rollers 204b' and 204b are pushed to the rear together with a switch 204. Thus, firstly, the right side contact roller 204b is pushed downwardly by the right circumferential surface edge of the switch driving means 202 and so a switch contact point is connected by the right side contact roller 204b. An air compressor 208 is operated by the switch connection and so a linear actuator is operated and the second driven gear 208 is pushed to the driving gear 206. As a result, the driving gear 206 and the second driven gear 208 are engaged with each other. Accordingly, as shown in FIG. 9b, the first and second driven gears 207 and 208 are simultaneously engaged with the driving gear 206 and so two power generators 301 and 302 are simultaneously generated.

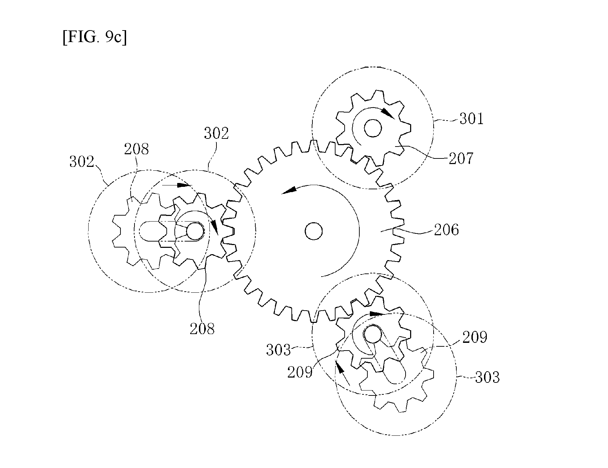

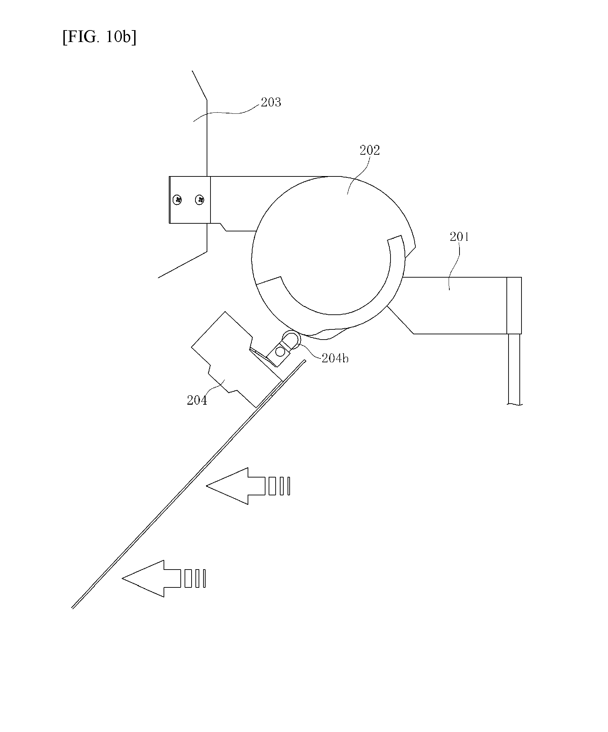

When the strength of wind become stronger, as shown in FIG. 10b, a wind receiving wing 204a is pushed more to the rear, so left and right contact rollers 204b' and 204b are pushed to the rear together with a switch 204. Thus, the left side contact roller 204b' is pushed downwardly by the left circumferential surface edge of the switch driving means 202 and so a switch contact point is connected by the left side contact roller 204b'. At this time, two switch contact points are connected all by the left and right side contact rollers 204b' and 204b. Thus, an air compressor 208 is operated by the connection of two switches and so a linear actuator is operated and the third driven gear 209 together with the second driven gear 208 is pushed to the driving gear 206. Accordingly, as shown in FIG. 9c, the first, second, and third driven gears 207, 208, and 209 are simultaneously engaged with the driving gear 206 and so three power generators 301, 302, and 303 are simultaneously generated.

Here, although only the first, second and third driven gears 207, 208, and 209 are installed and explained, the driven gear can be installed above three.

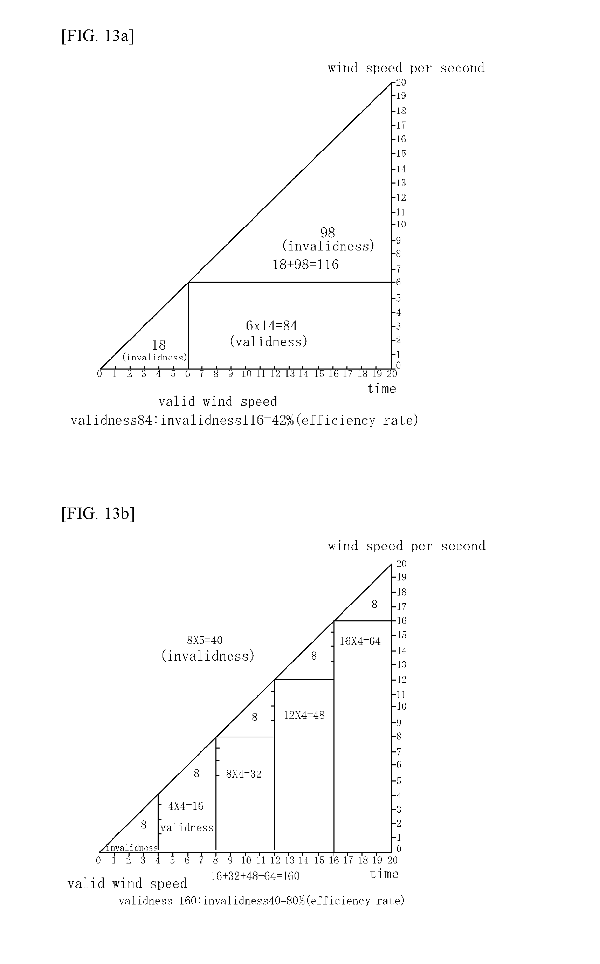

FIG. 13a is a view illustrating power generation efficiency according to the wind speed of a conventional wind power generator. FIG. 13b is a view illustrating power generation efficiency of a variable windmill wing wind power generator having a power generation efficiency increasing means according to the present invention.

As shown in FIG. 13a, according to a conventional invention, if the wind with 6 m/s for 14 hours rises, the valid wind for generating power is 84 by 6 x 14 and the invalid entire wind for generating power is 116 by 18+98, so that the efficiency rate is 42% by 84/200. Whereas, as shown in FIG. 13b, according to the present invention, it is assumed that the wind with 4 m/s for 4 hours rises, the wind with 8 m/s for 4 hours rises, the wind with 12 m/s for 4 hours rises, and the wind with 16 m/s for 4 hours rises. 1). If the wind with 4 m/s for 4 hours rises, the valid wind for operating one generator is 16 by 4 x 4. 2). If the wind with 8 m/s for 4 hours rises, the valid wind for operating two generators is 32 by 8 x 4. 3). If the wind with 12 m/s for 4 hours rises, the valid wind for operating three generators is 46 by 12 x 4. 4). If the wind with 16 m/s for 4 hours rises, the valid wind for operating four generators is 64 by 16 x 4. Accordingly, the valid entire wind for generating power is 160 by 16+32+48+64 and the invalid entire wind for generating power is 40 by 8 x 5, so that the efficiency rate is 80% by 160/200.

Also, since the wing parts 72 which form groups up and down are installed by the rotated state to the rotating direction with a constant angle, if the wing parts 72 of a group are rotated with a constant angle at the vertical surface to the wind direction, the wing parts 72 of another group form the same fashion, so that the wing parts 72 of each group form the vertical surface to the wind direction sequentially, thereby enhancing the power generation efficiency.

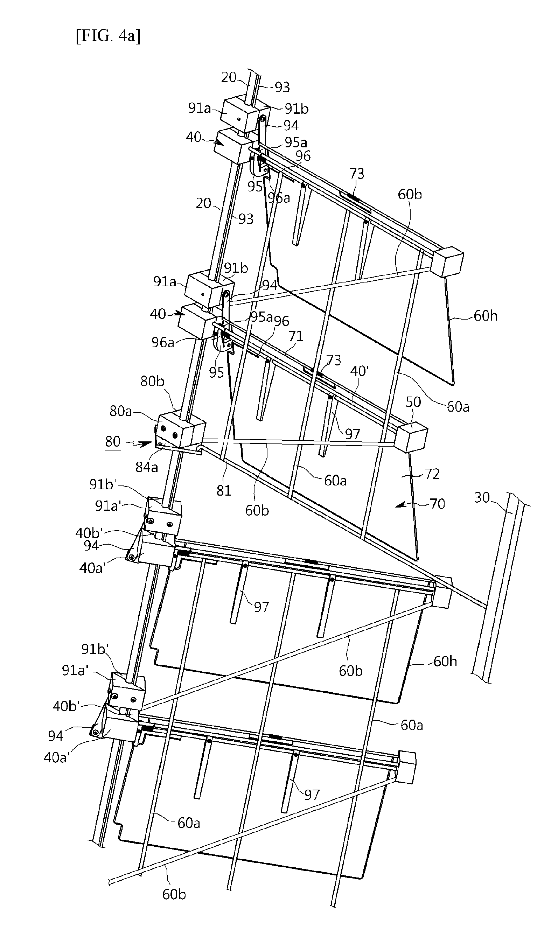

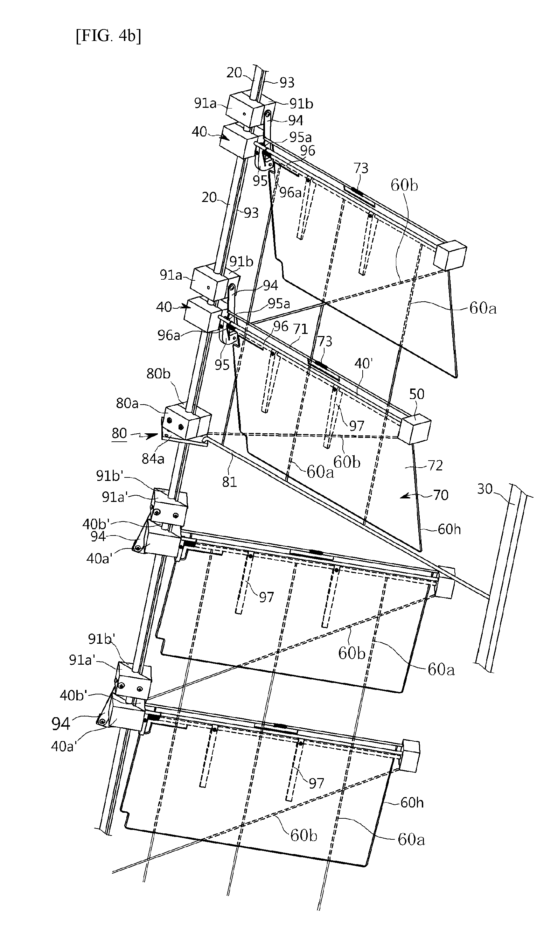

The operation of the windmill wings 70 described above can be accomplished in that the wing parts 72 receiving the wind are suspended on the levers 97 in the front/rear direction (see FIGS. 4a and 4b) and are horizontal with respect to the ground in the opposite side after 180° rotation.

FIG. 20 is a schematic plan view of the flow of the wind between the windmill wings, when the variable windmill wing power generator having a power generation efficiency increasing means according to the present invention is installed in a plural number.

As shown in FIG. 20, arrows P indicate the wind blowing directions and arrows Q indicate the rotation directions of the respective wind power generators A. The wind power generators A of the first column are rotated in the clockwise direction and the wind power generators A of the second column are rotated in the counterclockwise direction. In addition, the wind power generators A of the third column are rotated in the clockwise direction and the wind power generators A of the fourth column are rotated in the counterclockwise direction. In this way, the wind power generators A of the respective columns are alternately rotated in opposite directions.

Here, the wind blowing into a wide region gets stronger through narrow regions such as between the wind power generators A of the first column and the wind power generators A of the second column and between the wind power generators A of the third column and the wind power generators A of the fourth column, so that the power generation efficiency of the wind power generators A increases. In this case, even if the wind blows in the front/rear, left/right or diagonal direction, the wind power generators A make a pair by two columns, so that the wind power generators A of one column are rotated in the clockwise direction and the wind power generators A of the other column are rotated in the counterclockwise direction to generate power.

The rotation directions of the wind power generators A as described above can be accomplished in that each column selectively employs the structure in which the wing parts 72 are suspended on the front lever 97 in the rear (see FIG. 4a) and the structure in which the wing parts 72 are suspended on the rear levers 97 in the front (see FIG. 4b). That is, the wind power generators A having the windmill wings 70 as shown in FIG. 4a are rotated in the clockwise direction and the wind power generators A having the windmill wings 70 as shown in FIG. 4b are rotated in the counterclockwise direction.

FIG. 21 is a comparative view of the installation state of the windmill wings between the conventional wind power generator and the wind power generator according to the present invention.

As shown in FIG. 21, in the conventional invention, the windmill wings with the height of wing of 50m are installed at the height between 22m and 122m from the ground, whereas, the present invention has three groups up and down, in each group, a plurality of wings are installed up and down and the wings are installed at the height between 18m and 100m from the ground.

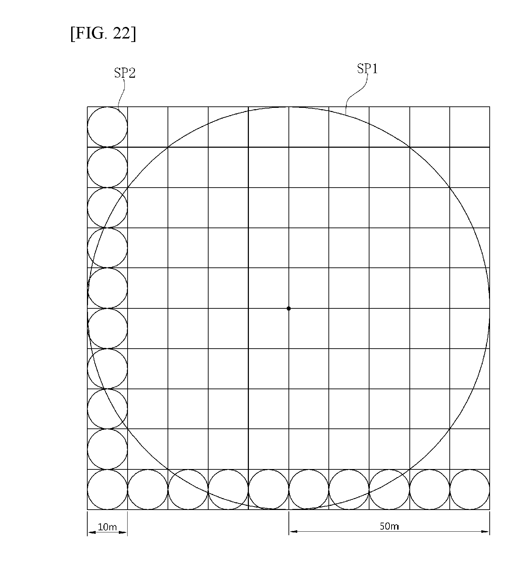

FIG. 22 is a comparative view of the use efficiency of the installation land between the conventional wind power generator and the wind power generator according to the present invention.

As shown in FIG. 22, the view is comparing an installation region SP1 of the power generator with the length of wing of 50m according to the conventional invention with an installation region SP2 of the power generator with the length of wing of 5m according to the present invention. The installation region SP1 of the power generator according to the conventional invention is 50² x π and the installation region SP2 of the power generator according to the present invention is 5² x π, so that the present invention can increase 100 times of the use efficiency of the installation land compared to the conventional invention.

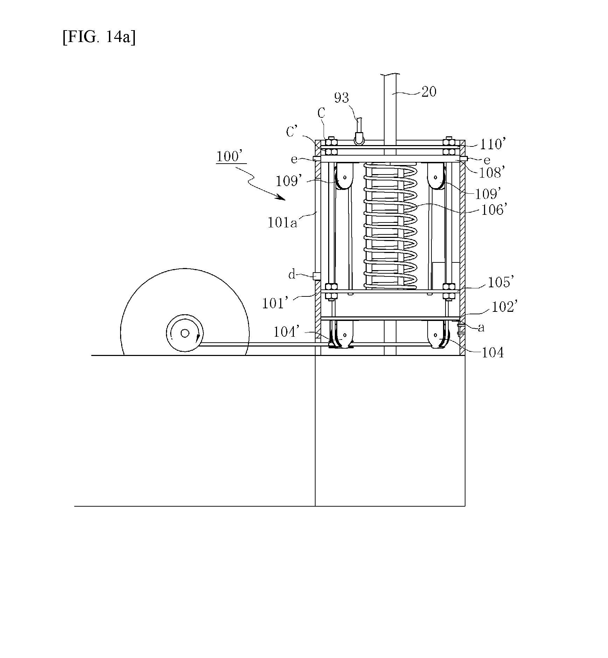

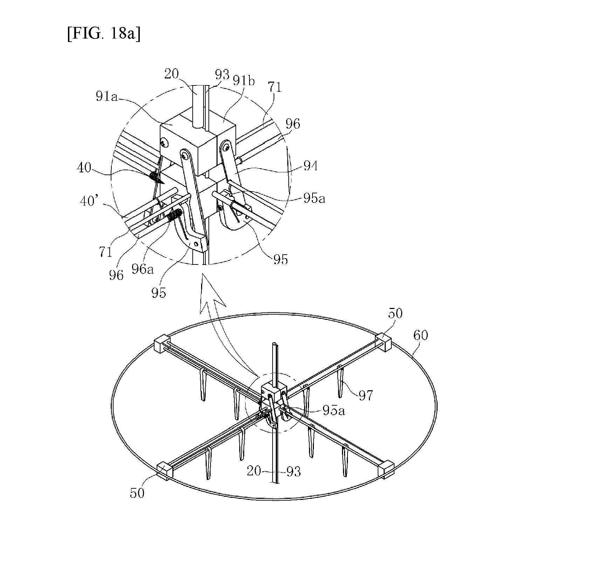

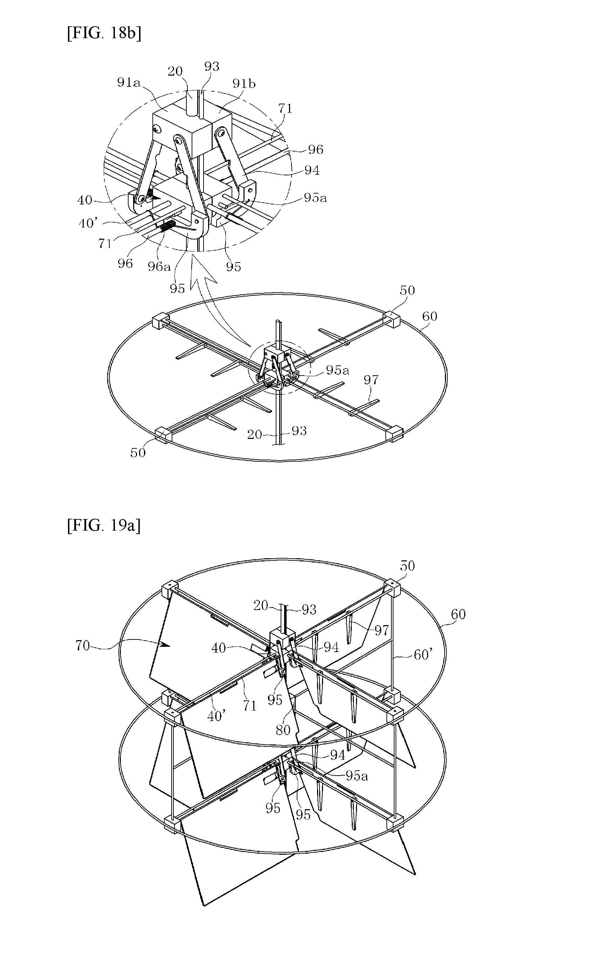

If the wind power generator A having the variable windmill according to the present invention which performs the wind power generation as described above, as illustrated in FIGS. 14a, 17a, 18a, 19a, in a state where the windmill wing fixing means 90' do not operate, the lever 97 have a vertical downward state to maintain the windmill wings 70 receiving the wind to be in the vertical state, so that the windmill wings 70 operate in the normal state and generate power.

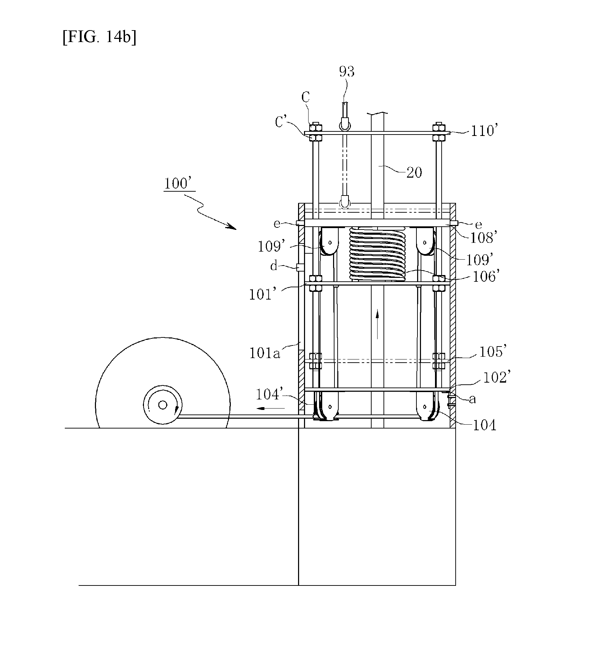

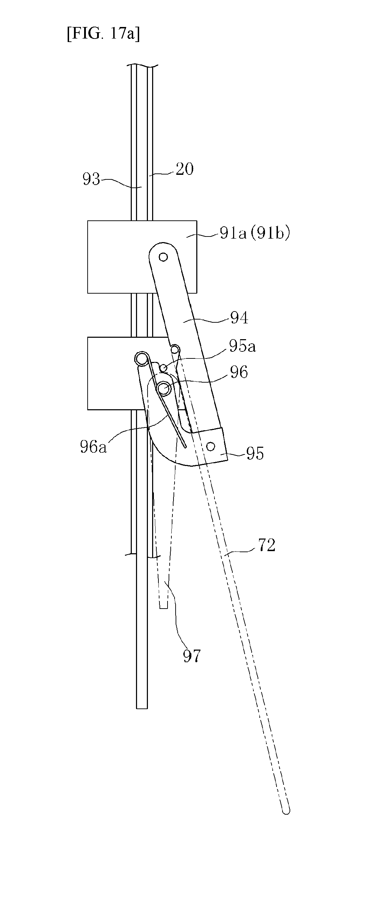

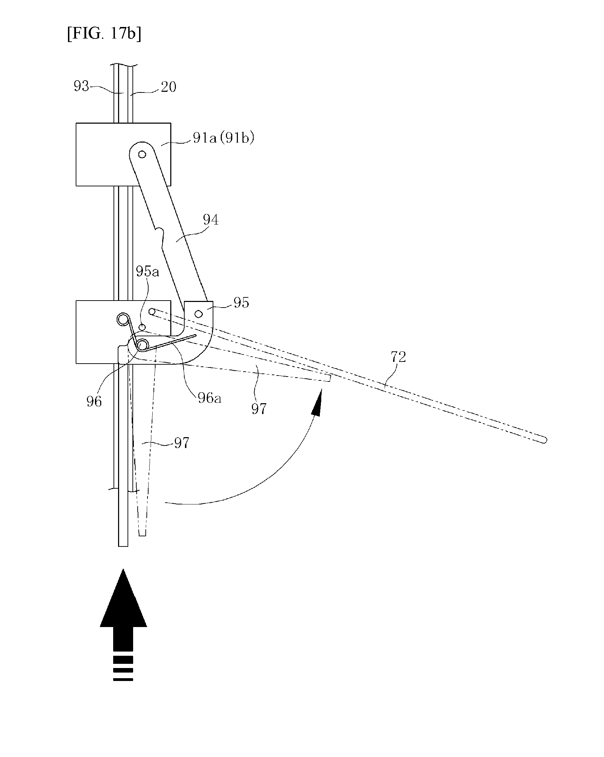

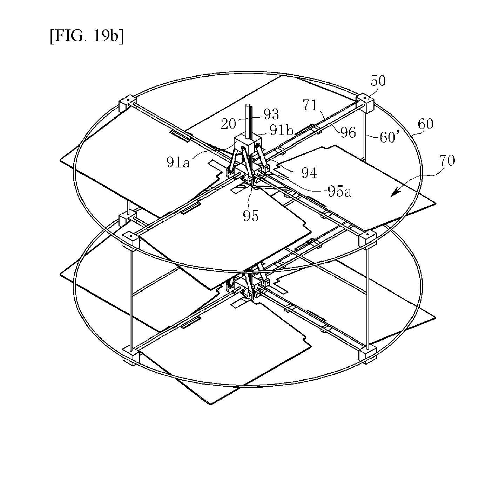

If it is necessary to protect the wind power generator A from the storm or to mend, manage and repair the wind power generator A, in order to stop the operation of the wing power generator A, the fixing means driving device 100' is operated as shown in FIG. 14b, thus upwardly moving the moving shaft 93 of the windmill wing fixing means 90' as shown in FIGS. 17b, 18b, and 19b. That is, when the motor 112' is rotated in the normal direction, a rope 111 is wound to a shaft of the motor 112' , a spring 106' is compressed, and a lower moving plate 105' is lifted, so that a moving shaft 107' is lifted and the lifted moving shaft 107' upwardly moves the upper moving plate 110'.

The lifted upper moving plate 110' upwardly moves the moving shaft 93, so that the moving units 91a and 91b fixed to the moving shaft 93 are lifted along the vertical rotating shaft 20, and thus the straight levers 94 are lifted. At this time, also a guide protrusion d is lifted along a guide groove 101a at a state that a lower switch contact point, which is not shown, is connected, and thus, at the state that the straight lever 94 is completely lifted, the fore-end of the guide protrusion d disconnects the upper switch contact point of a switch means, which is not shown, thus upwardly pulling the 'L'-shaped levers 95. Thus, the rotation shafts 96 are rotated, so that the levers 97 lift the wing parts 72 of the windmill wings 70. Thus, the wing parts 72 of the entire windmill wings 70 maintain the horizontal state with respect to the ground not to receive the blowing wind (the state of FIGS. 14b,17b, 18b and 19b) and the rotation of the vertical rotating shaft 20 is stopped. In this situation, the wind power generator A can be mended, managed and repaired.

Here, differently from the case in which the operation of the wind power generator A is stopped by upwardly moving the moving shaft 93 completely, the angle of the vertical surface to the wing parts 72 of the windmill wings 70 can be set according to the degree of upwardly moving the moving shaft 93. In the event of a storm, the moving shaft 93 is upwardly moved and fixed in advance according to the predicted intensity of the storm, so that the wing parts 72 do not receive the entire wind, but make some of the wind pass by. As a result, the wind power generator A can be protected from the storm.

Moreover, the operation of the wind power generator A is stopped by upwardly moving the moving shaft 93 completely and then a worker for mending the wind power generator climbs up a ladder 60c to a working position, or goes up with a small-sized ladder on occasional demands and drapes the small-sized ladder between the horizontal support rods 40' and then moves toward the working position, mounting the small-sized ladder.

Also, in order to lower and return the lifted moving shaft 93, the motor 112' is rotated in the reverse direction. That is, when the motor 112' is rotated in the reverse direction, the rope wound to the shaft of the motor 112'is unwound and the lower moving plate 105' is lowered by the elastic force of the spring 106', so that the moving shaft 107' is lowered and the upper moving plate 110' is lowered.

Therefore, the lowering of the upper moving plate 110' downwardly moves the moving shaft 93. At this time, also a guide protrusion d is lowered along a guide groove 101a and so an upper switch contact point, which is not shown, is connected. Through the lowering of the moving shaft 93, when the ends of the 'L'-shaped lever 95 are suspended on the stopper pins 95a and does not rotated, the fore-end of the guide protrusion d disconnects the upper switch contact point of a switch means, which is not shown and thus the levers 97 moves downwardly and vertically. As a result, the wind power generator A reaches the state shown in FIGS. 14a, 17a, 18a, and 19a, i.e., the normal power generation state.

While the present invention has been illustrated and described in connection with the preferred embodiments, the present invention is not limited thereto. Accordingly, it will be understood by those skilled in the art that various modifications and changes can be made thereto without departing from the scope of the invention defined by the appended claims.

## Claims

1. A variable windmill wing wind power generator comprising:
an installation mount (10) stood on the floor in the shape of a cross (+) and having a vertical rotating shaft holder in a central portion thereof;
a vertical rotating shaft (20) rotatably and uprightly installed in the central portion of the installation mount (10);
a bearing (20') into which a top end of the vertical rotating shaft (20) is rotatably inserted;
'['-shaped holders (30) connected and fixed between the bearing (20') and the installation mount (10);
a plurality of inner wing installation units (40) fixedly installed on the vertical rotating shaft (20) at given intervals in the up/down direction;
support rods (40') having one-side ends fixed to the inner wing installation units (40);
a plurality of outer wing installation units (50) to which outer ends of the support rods (40') are fixed;
windmill wings (70) installed between the inner wing installation units (40) and the outer wing installation units (50);
vertical support rods (60') made of a steel wire and connecting the outer wing installation units (50) of groups of windmill wings that are adjacent in the up/down direction;
a plurality of support bars (60a) made of a steel wire and connected between the highest support rod (40') and the lowest support rod (40') of the windmill wings (70) of the respective groups;
support units (80) installed on the vertical rotating shaft (20) between the groups of the windmill wings (70), and connected to the '['-shaped holders (30);
windmill wing fixing means (90) installed on the vertical rotating shaft (20) above the inner wing installation units (40) to be movable in the up/down direction and fixing displacements of the windmill wings (70);
fixing means driving device (100');
and **characterized in that** the generator further comprises:
support rings (60) made of a steel wire and connected to the outer wing installation units (50) on the same plane;
a plurality of diagonal support bars (60b) connected and fixed between upper outer wing installation units (50) and lower inner wing installation units (40) of the windmill wings (70) of the same group;
a ladder (60c') fixed to the support rods (40') of the windmill wings (70) of each group;
a plurality of power generation means (300) for performing power generation;
and a power generation efficiency increasing means (200) installed at the lower center portion of the installation mount (10), the plurality of power generation means (300) being installed on the bottom portion of the power generation efficiency increasing means (200), the power generation efficiency increasing means (200) being arranged to change the number of power generation means (300) engaged with the vertical rotating shaft (20) according to the strength of wind;
wherein the support units (80) are connected to the '['-shaped holders through wires (81);
the fixing means driving device (100') is installed on the bottom end side of the vertical rotating shaft (20);
and wherein the power generation efficiency increasing means (200) comprises:
a circular plate shape switch driving means (202) installed at a support shaft, which installed uprightly and separately adjacent to the vertical rotating shaft (20), by a bracket (201);
a rudder (203) connected and installed to the switch driving means (202), wherein it is rotated according to the wind blowing direction to receive the wind direction frontally;
a switch (204) having a wind receiving wing (204a) which is installed at a lower portion of the switch driving means (202) and turned on or off according to the strength of wind;
a driving gear (206) connected with a lower end of the vertical rotating shaft (20) within a housing (205) equipped to a lower end portion of the vertical rotating shaft (20);
a first driven gear (207) engaged with the driving gear (206);
a second and a third driven gears (208, 209) installed adjacent to the driving gear (206) and engaged with the driving gear (206) according to the strength of wind; and
an air compressor (210) for pushing all or any one among the first to the third driven gears (207, 208, 209) to the driving gear (206) through the respective linear actuators according to the contact point state of the switch so as to be engaged with the driving gear (206), wherein the switch (204) comprises a wind receiving wing (204a), a right side contact roller (204b) contacted to the right outer circumferential edge of the switch driving means (202), and a left side contact roller (204b') contacted to the left outer circumferential edge of the switch driving means (202), arranged so that when the strength of wind becomes the constant strength, the right outer circumferential edge of the switch driving means (202) pushes the right contact roller (204b) and is switched, and when the strength of wind becomes stronger, the left outer circumferential edge of the switch driving means (202) pushes the left contact roller (204b') and is switched.

2. The wind power generator of Claim 1, wherein each of the inner wing installation units (40) is divided into two installation units (40a, 40b), which are coupled to each other by a bolt (41), the ends of the support rods (40') are inserted into the inner wing installation unit (40) in the horizontal direction from the front, rear, left and right directions and fixed thereto by a bolt (42) downwardly inserted from the top surface, the ends of wing rotating shafts (71) are rotatably inserted into the inner wing installation units (40) on the same plane as the support rods (40'), the ends of rotating shafts (96) of the windmill wing fixing means (90') are rotatably inserted into the inner wing installation units (40) below the inserted portions of the support rods (40') and the wing rotating shafts (71), the other ends of the support rods (40') are inserted into and fixed to the outer wing installation units (50), and the respective other ends of the wing rotating shafts (71) and the rotating shafts (96) are rotatably inserted into the outer wing installation units (50).

3. The wind power generator of Claim 2, wherein the inner wing installation units (40) are divided into a structure in which the cutting side of the central portion for dividing the installation unit (40) into two is parallel to the outer side and a structure in which the cutting side for dividing the installation unit (40) into two is diagonal, and employed for each group of the windmill wings.

4. The wind power generator of any one of the preceding claims, wherein each of the windmill wings (70) comprises:
a wing rotating shaft (71) rotatably installed between the inner wing installation unit (40) and the outer wing installation unit (50) on the same plane as the support rod (40');
a wing part (72) having one side fixed to the wing rotating shaft (71); and
a wing spring (73) inserted into a central portion of the wing rotating shaft (71) and maintaining the wing part (72) 45 degree from the horizontal surface during non-operation.

5. The wind power generator of Claim 4, wherein the wing rotating shafts (71) located on the same plane are connected with plural steel wire support bars (60c, 60d, 60f), plural steel wire support bars (60c) are connected and fixed between the support ring (60), and also a support bar (60c) and a support bar (60d), and a support bar (60f) and a support ring (60) are connected with each other.

6. The wing power generator of Claim 4 or 5, wherein the wing parts (72) are made of any one selected from the group consisting of transparent or opaque reinforced plastic, strengthened glass, non-ferrous metal, and duralumin.

7. The wing power generator of any one of the preceding claims, wherein each of the support units (80) is divided into two support bodies (80a, 80b), which are coupled to each other by a bolt (82), support plates are inserted into bottom circular projection portions (83) formed by the coupling of the support bodies (80a, 80b), each of the support plates is divided into two support plates (84a, 84b) so that one support plate forms a hinge structure and the other support plate is coupled to a bolt (86) through the medium of a bracket (85), the ends of the wires (81) are fixed to four edges of the coupled support plates (84a, 84b), and the other ends of the wires (81) are connected and fixed to the '['-shaped holders (30).

8. The wind power generator of any one of the preceding claims, wherein each of the windmill wing fixing means (90') is divided into two moving units (91a, 91b), which are coupled to each other by a bolt (92) so that the moving units (91a, 91b) can move in the up/down direction with the vertical rotating shaft (20) inserted into a central portion thereof, a moving shaft (93) for moving the moving units (91a, 91b) in the up/down direction is inserted and fixed between two moving units (91a, 91b), the ends of the straight lever (94) are fixed to outer surfaces of the two coupled moving units (91a, 91b), respectively, the ends of 'L'-shaped levers (95) are rotatably connected to the other ends of the straight levers (94), rotating shafts (96) provided with springs (96a) are inserted into the other ends of the 'L'-shaped levers (95) and rotatably inserted into the inner wing installation units (40), stopper pins (95a) for stopping rotation of the 'L'-shaped levers (95) are inserted into and fixed to the inner wing installation units (40) on which the other ends of the 'L'-shaped levers (95) are located, the springs (95a) have the ends mounted on and fixed to the support rods (40') and the other ends fixed on the 'L'-shaped levers adjacent to the connection portions of the straight levers (94) and the 'L'-shaped levers (95), and a plurality of levers (97) are fixed on the rotating shafts (96) at given intervals.

9. The wind power generator of Claim 8, wherein the two moving units (9 1 a, 91b) have a structure in which the cutting side of the central portion for dividing the moving unit into two is parallel to the outer side, two moving units (91a', 91b') having a structure in which the cutting side is diagonal are further provided, the moving units (91a, 91b) of the parallel structure are employed for one group of windmill wings (70) and the moving units (91a', 91b') of the diagonal structure are employed for the other group of windmill wings (70).

10. The wind power generator of any one of the preceding claims, wherein the fixing means driving device (100') comprises:
a rectangular box body (101);
a lower fixing plate (102') fixed to a lower portion in the rectangular box body (101');
a pair of rollers (103') installed at a lower side of the lower fixing plate (102');
lower rollers (104') installed at every lower side corner of the lower fixing plate (102');
a lower moving plate (105') moved upwardly and downwardly in the rectangular box body (101');
a spring (106') inserted into the upper side center of the lower moving plate (105');
a plurality of moving shafts (107') fixed uprightly at the corner of the lower moving plate (105');
an upper fixing plate (108') fixed to an upper portion in the rectangular box body (101');
upper rollers (109') installed at every lower side corner of the upper fixing plate (108');
an upper moving plate (110') fixed at an upper end of a plurality of moving shafts (107');
a rope means (111') comprising ropes (111a~111d) which is hung the rollers (103') and upper and lower rollers (109', 104'); and
a motor (112') for winding and unwinding the rope means (111').

11. The wind power generator of Claim 10, wherein the rectangular box body (101') includes a guide groove (101a) having oblong shapes at upper and lower portions thereof, formed at a side of the rectangular body, the lower fixing plate (102') is fixed to a lower portion of the rectangular box body (101') by a '¬'-shaped bracket, the rollers (103', 104') are fixed to a lower side of the lower fixing plate (102') by a bracket (b), the lower end of the moving shaft (107') is fixed to the corner of the lower moving plate (105') by nuts (c, c') and the upper end of the moving shaft (107') is fixed to the upper moving plate (110') by nuts (c, c'), a guide member (105a) having a guide protrusion (d) is fixed at an upper side end of the lower moving plate (105') and the guide protrusion (d) is inserted into the guide groove (101a), a fixing bolt (e) is formed at a side of the upper fixing plate (108') and inserted and fixed into a side of the rectangular box body (101'), and an upper roller (109') is fixed to a lower side of the upper fixing plate (108') by a bracket (b).

12. The wind power generator of any of the preceding claims, wherein the power generation means (300) comprise power generators (301, 302, 303) installed at the lower portions of the first to third driven gears (207, 208, 209) engaged with the driving gear (206), respectively.

13. The wind power generator of any one of the preceding claims, wherein the wind power generator is installed in a plural number in the front/rear and left/right horizontal directions, and the turbines (300) of the respective wind power generators are electrically connected with each other, so that power generated by each turbine (300) is combined.

14. The wind power generator of Claim 13, wherein a plurality of pillars are vertically installed on front/rear and left/right outer portions, and connected and fixed to the bearing portions (20') of the respective wind power generators by wires.

## Patentansprüche

1. Windstromgenerator mit variablen Windmühlenflügeln, umfassend:
eine Montagehalterung (10), welche in der Form eines Kreuzes (+) auf dem Boden steht und einen Halter für eine vertikale drehende Welle in einem mittigen Abschnitt davon aufweist;
eine vertikale drehende Welle (20), welche drehbar und aufrecht in dem mittigen Abschnitt der Installationshalterung (10) montiert ist;
ein Lager (20'), in welches ein oberes Ende der vertikalen drehenden Welle (20) drehbar eingeführt ist;
'['-förmige Halter (30), welche zwischen dem Lager (20') und der Montagehalterung (10) verbunden und befestigt sind;
mehrere innere Flügel-Montageeinheiten (40), welche in vorgegebenen Abständen in der Oben-/Unten-Richtung an der vertikalen drehenden Welle (20) fest montiert sind;
Stützstangen (40'), welche einseitige Enden aufweisen, die an den inneren Flügel-Montageeinheiten (40) befestigt sind.
mehrere äußere Flügel-Montageeinheiten (50), an welchen äußere Enden der Stützstangen (40') befestigt sind,
Windmühlenflügel (70), welche zwischen den inneren Flügel-Montageeinheiten (40) und den äußeren Flügel-Montageeinheiten (50) montiert sind;
vertikale Stützstangen (60'), welche aus Stahldraht hergestellt sind und die äußeren Flügel-Montageeinheiten (50) von Gruppen von Windmühlenflügeln, welche in der Oben-/Unten-Richtung benachbart sind, verbinden;
mehrere Stützstreben (60a), welche aus Stahldraht hergestellt sind und zwischen der obersten Stützstange (40') und der untersten Stützstange (40') der Windmühlenflügel (70) der entsprechenden Gruppen verbunden sind;
Stützeinheiten (80), welche auf der vertikalen drehenden Welle (20) zwischen den Gruppen der Windmühlenflügel (70) montiert und mit den '['-förmigen Haltern (30) verbunden sind;
Windmühlenflügel-Befestigungsmittel (90), welche auf der vertikalen drehenden Welle (20) oberhalb der inneren Flügel-Montageeinheiten (40) montiert sind, um in der Oben-/Unten-Richtung bewegbar zu sein und Verschiebungen der Windmühlenflügel (70) entgegenzuwirken;
Befestigungsmittel-Antriebsvorrichtung (100');
und **dadurch gekennzeichnet, dass** der Generator darüber hinaus umfasst:
Stützringe (60), welche aus Stahldraht hergestellt sind und die äußeren Flügel-Montageeinheiten (50) auf derselben Ebene verbinden;
mehrere diagonale Stützstreben (60b), welche zwischen oberen äußeren Flügel-Montageeinheiten (50) und unteren inneren Flügel-Montageeinheiten (40) der Windmühlenflügel (70) derselben Gruppe verbunden und befestigt sind;
eine Leiter (60c'), welche an den Stützstangen (40') der Windmühlenflügel (70) jeder Gruppe befestigt ist;
mehrere Stromerzeugungsmittel (300) zur Durchführung einer Stromerzeugung;
und Stromerzeugungs-Effizienz-Steigerungsmittel (200), welche an dem unteren mittigen Abschnitt der Montagehalterung (10) montiert sind, wobei die mehreren Stromerzeugungsmittel (300) auf dem Bodenabschnitt der Stromerzeugungs-Effizienz-Steigerungsmittel (200) montiert sind, wobei die Stromerzeugungs-Effizienz-Steigerungsmittel (200) ausgestaltet sind, um die Anzahl der Stromerzeugungsmittel (300), welche sich mit der vertikalen drehenden Welle (20) in Eingriff befinden, gemäß der Stärke des Windes zu ändern;
wobei die Stützeinheiten (80) durch Drähte (81) mit den '['-förmigen Haltern verbunden sind;
wobei die Befestigungsmittel-Antriebsvorrichtung (100') auf der Bodenendseite der vertikalen drehenden Welle (20) montiert ist;
und wobei die Stromerzeugungs-Effizienz-Steigerungsmittel (200) umfassen:
kreisförmige plattenförmige Schaltersteuermittel (202), welche an einer Stützwelle montiert sind, die durch eine Halterung (201) senkrecht und beabstandet neben der vertikalen drehenden Welle (20) montiert ist;
ein Ruder (203), welches mit den Schaltersteuermitteln (202) verbunden und an diesen montiert ist, wobei es sich abhängig von der Windrichtung dreht, um die Windrichtung frontal aufzunehmen;
einen Schalter (204), welcher einen Windaufnahmeflügel (204a) aufweist, der an einem unteren Abschnitt der Schaltersteuermittel (202) montiert ist, und abhängig von der Stärke des Windes ein- oder ausgeschaltet ist;
ein antreibendes Getriebe (206), welches mit einem unteren Ende der vertikalen drehenden Welle (20) in einem Gehäuse (205) verbunden ist, welches an einem unteren Endabschnitt der vertikalen drehenden Welle (20) ausgestaltet ist;
ein erstes angetriebenes Getriebe (207), welches sich mit dem antreibenden Getriebe (206) in Eingriff befindet;
ein zweites und ein drittes angetriebenes Getriebe (208, 209), welche benachbart zu dem antreibenden Getriebe (206) montiert sind und sich abhängig von der Stärke des Windes mit dem antreibenden Getriebe (106) in Eingriff befinden; und einen Luftkompressor (210), um alle oder irgendeines von dem ersten bis dritten angetriebenen Getriebe (207, 208, 209) zu dem antreibenden Getriebe (206) durch die entsprechenden linearen Aktoren abhängig von dem Kontaktpunktzustand des Schalters zu schieben, so dass sie mit dem antreibenden Getriebe (206) in Eingriff kommen, wobei der Schalter (204) einen den Wind aufnehmenden Flügel (204a), eine rechte Seitenkontaktwalze (204b), welche die rechte äußere Umfangskante der Schaltersteuermittel (202) berührt, und eine linke Seitenkontaktwalze (204b'), welche die linke äußere Umfangskante der Schaltersteuermittel (202) kontaktiert, umfasst und ausgestaltet ist, so das, wenn die Stärke des Windes zu der konstanten Stärke wird, die rechte äußere Umfangskante der Schaltersteuermittel (202) die rechte Kontaktwalze (204b) schiebt und geschaltet wird, und, wenn die Stärke des Windes stärker wird, die linke äußere Umfangskante der Schaltersteuermittel (202) die linke Kontaktwalze (204b') schiebt und geschaltet wird.

2. Windstromgenerator nach Anspruch 1, wobei jede der inneren Flügel-Montageeinheiten (40) in zwei Montageeinheiten (40a, 40b) unterteilt ist, welche miteinander durch einen Bolzen (41) gekoppelt sind, wobei die Enden der Stützstangen (40') in die innere Wind-Montageeinheit (40) in der horizontalen Richtung von der vorderen, hinteren, linken und rechten Richtung eingeführt sind und durch einen Bolzen (42) damit befestigt sind, welcher von der oberen Fläche nach unten eingeführt ist, wobei die Enden von Winddrehwellen (71) drehbar in die inneren Flügel-Montageeinheiten (40) auf derselben Ebene wie die Stützstangen (40') eingeführt sind, wobei die Enden von Drehwellen (96) der Windmühlenflügel-Befestigungsmittel (90') drehbar in die inneren Flügel-Montageeinheiten (40) unterhalb der eingeführten Abschnitte der Stützstangen (40') und der Winddrehwellen (71) eingeführt sind, wobei die anderen Enden der Stützstangen (40') in die äußeren Flügel-Montageeinheiten (50) eingeführt und damit befestigt sind, und wobei die jeweils anderen Enden der Winddrehwellen (71) und der Drehwellen (96) drehbar in die äußeren Flügel-Montageeinheiten (50) eingeführt sind.

3. Windstromgenerator nach Anspruch 2, wobei die inneren Flügel-Montageeinheiten (40) aufgeteilt sind in eine Struktur, bei welcher die Schnittseite des mittigen Abschnitts zur Teilung der Montageeinheit (40) in zwei parallel zu der Außenseite ist, und in eine Struktur, bei welcher die Schnittseite zum Teilen der Montageeinheit (40) in zwei diagonal ist, und für jede Gruppe der Windmühlenflügel eingesetzt sind.

4. Windstromgenerator nach einem der vorhergehenden Ansprüche, wobei jeder der Windmühlenflügel (70) umfasst:
eine Flügeldrehwelle (71), welche drehbar zwischen der inneren Flügel-Montageeinheit (40) und der äußeren Flügel-Montageeinheit (50) auf derselben Ebene wie die Stützstange (40') montiert ist;
ein Flügelteil (72), welches eine Seite aufweist, welche an der Flügeldrehwelle (71) befestigt ist; und
eine Flügelfeder (73), welche in einen mittigen Abschnitt der Flügeldrehwelle (71) eingeführt ist und das Flügelteil (72) bei 45 Grad von der horizontalen Fläche hält, wenn kein Betrieb ist.

5. Windstromgenerator nach Anspruch 4, wobei die Flügeldrehwellen (71), welche auf derselben Ebene angeordnet sind, mit mehreren Stahldraht-Stützstreben (60c, 60d, 60f) verbunden sind, wobei die mehreren Stahldraht-Stützstreben (60c) zwischen dem Stützring (60) verbunden und befestigt sind, und wobei auch eine Stützstrebe (60c) und eine Stützstrebe (60d) und eine Stützstrebe (60f) und ein Stützring (60) miteinander verbunden sind.

6. Windstromgenerator nach Anspruch 4 oder 5, wobei die Flügelteile (72) aus einem hergestellt sind, welches ausgewählt ist aus der Gruppe, welche besteht aus einem transparenten oder nicht transparenten verstärkten Kunststoff, verstärktem Glas, nicht eisenhaltigem Metall und Duraluminium.

7. Windstromgenerator nach einem der vorhergehenden Ansprüche, wobei jede der Montageeinheiten (80) in zwei Stützkörper (80a, 80b) unterteilt ist, welche miteinander durch einen Bolzen (82) gekoppelt sind, wobei Stützplatten in kreisförmige Bodenvorsprungsabschnitte (83) eingeführt sind, welche ausgebildet werden, indem die Stützkörper (80a, 80b) gekoppelt werden, wobei jede der Stützplatten in zwei Stützplatten (84a, 84b) unterteilt ist, so dass eine Stützplatte eine Gelenkstruktur ausbildet und die andere Stützplatte mittels einer Halterung (85) mit einem Bolzen (86) gekoppelt ist, wobei die Enden der Drähte (81) an vier Kanten der gekoppelten Stützplatten (84a, 84b) befestigt sind und wobei die anderen Enden der Drähte (81) mit den '['-förmigen Haltern (30) verbunden und mit diesen befestigt sind.

8. Windstromgenerator nach einem der vorhergehenden Ansprüche, wobei jedes der Windmühlenflügel-Befestigungsmittel (90') in zwei bewegliche Einheiten (91a, 91 b) unterteilt ist, welche miteinander durch einen Bolzen (92) gekoppelt sind, so dass sich die beweglichen Einheiten (91 a, 91 b) in der Oben-/Unten-Richtung mit der vertikalen drehenden Welle (20), welche in einen mittigen Abschnitt davon eingeführt ist, bewegen können, wobei eine bewegliche Welle (93), um die beweglichen Einheiten (91 a, 91 b) in der Oben-/Unten-Richtung zu bewegen, zwischen zwei bewegliche Einheiten (91 a, 91 b) eingeführt und damit befestigt wird, wobei die Enden des geradlinigen Hebels (94) jeweils an Außenflächen der zwei gekoppelten beweglichen Einheiten (91 a, 91 b) befestigt sind, wobei die Enden von 'L'-förmigen Hebeln (95) drehbar mit den anderen Enden des geradlinigen Hebels (94) verbunden sind, wobei drehende Wellen (96), welche mit Federn (96a) vorhanden sind, in die anderen Enden der 'L'-förmigen Hebel (95) eingeführt sind und drehbar in die inneren Flügel-Montageeinheiten (40) eingeführt sind, wobei Stoppstifte (95a), um eine Drehung der 'L'-förmigen Hebel (95) zu stoppen, in die inneren Flügel-Montageeinheiten (40) eingeführt und daran befestigt sind, an welchen die anderen Enden der 'L'-förmigen Hebel (95) angeordnet sind, wobei die Federn (95a) aufweisen die Enden, welche auf den Stützstangen (40') montiert und mit diesen befestigt sind, und die anderen Enden, welche auf den 'L'-förmigen Hebeln benachbart zu den Verbindungsabschnitten der geradlinigen Hebel (94) und der 'L'-förmigen Hebel (95) befestigt sind, und wobei mehrere Hebel (97) auf den Drehwellen (96) in vorgegebenen Abständen befestigt sind.

9. Windstromgenerator nach Anspruch 8, wobei die zwei beweglichen Einheiten (91 a, 91 b) eine Struktur aufweisen, bei welcher die Schnittseite des mittigen Abschnitts, um die bewegliche Einheit in zwei zu teilen, parallel zu der Außenseite ist, wobei zwei bewegliche Einheiten (91a', 91 b'), welche eine Struktur aufweisen, bei welcher die Schnittseite diagonal ist, darüber hinaus bereitgestellt sind, wobei die beweglichen Einheiten (91 a, 91 b) der parallelen Struktur für eine Gruppe der Windmühlenflügel (70) eingesetzt werden und die beweglichen Einheiten (91 a', 91 b') der diagonalen Struktur für die andere Gruppe von Windmühlenflügel (70) eingesetzt werden.

10. Windstromgenerator nach einem der vorhergehenden Ansprüche, wobei die Befestigungsmittel-Steuervorrichtung (100') umfasst:
einen rechteckigen Kastenkörper (101);
eine untere Befestigungsplatte (102'), welche an einem unteren Abschnitt in dem rechteckigen Kastenkörper (101') befestigt ist;
ein Paar Walzen (103'), welche an einer unteren Seite der unteren Befestigungsplatte (102') montiert sind;
untere Walzen (104'), welche an jeder Ecke der unteren Seite der unteren Befestigungsplatte (102') montiert sind;
eine untere bewegliche Platte (105'), welche sich in dem rechteckigen Kastenkörper (101') nach oben und nach unten bewegt;
eine Feder (106'), welche in die Mitte der oberen Seite der unteren beweglichen Platte (105') eingeführt ist;
mehrere bewegliche Wellen (107'), welche an der Ecke der unteren beweglichen Platte (105') aufrecht stehend befestigt sind;
eine obere Befestigungsplatte (108'), welche an einem oberen Abschnitt in dem rechteckigen Kastenkörper (101') befestigt ist;
obere Walzen (109'), welche an jeder Ecke der unteren Seite der oberen Befestigungsplatte (108') montiert sind;
eine obere bewegliche Platte (110'), welche an einem oberen Ende von mehreren beweglichen Wellen (107') befestigt ist;
Seilmittel (111'), welche Seile (111a~111d) umfassen, die über die Walzen (103) und obere und untere Walzen (109', 104') führen; und
einen Motor (112'), um die Seilmittel (111') aufzuwickeln und abzuwickeln.

11. Windstromgenerator nach Anspruch 10, wobei der rechteckige Kastenkörper (101') eine Führungsvertiefung (101 a) mit länglichen Formen an oberen und unteren Abschnitten davon aufweist, welche an einer Seite des rechteckigen Körpers ausgebildet ist, wobei die untere Befestigungsplatte (102') an einem unteren Abschnitt des rechteckigen Kastenkörpers (101') durch eine '¬'-förmige Halterung befestigt ist, wobei die Walzen (103', 104') an einer unteren Seite der unteren Befestigungsplatte (102') durch eine Halterung (b) befestigt sind, wobei das untere Ende der beweglichen Welle (107') an der Ecke der unteren beweglichen Platte (105') durch Muttern (c, c') befestigt ist und das obere Ende der beweglichen Welle (107') an der oberen beweglichen Platte (110') durch Muttern (c, c') befestigt ist, wobei ein Führungsteil (105a) mit einem Führungsvorsprung (d) an einem Ende der oberen Seite der unteren beweglichen Platte (105') befestigt ist und der Führungsvorsprung (b) in die Führungsvertiefung (101 a) eingeführt ist, wobei ein Befestigungsbolzen (e) an einer Seite der oberen Befestigungsplatte (108') ausgebildet und in eine Seite des rechteckigen Kastenkörpers (101') eingeführt und damit befestigt ist, und wobei eine obere Walze (109') an einer unteren Seite der oberen Befestigungsplatte (108') durch eine Halterung (b) befestigt ist.

12. Windstromgenerator nach einem der vorhergehenden Ansprüche, wobei die Stromerzeugungsmittel (300) Stromgeneratoren (301, 302, 303) umfassen, welche an den unteren Abschnitten des ersten bis dritten angetriebenen Getriebes (207, 208, 209) montiert sind, welche sich jeweils mit dem antreibenden Getriebe (206) in Eingriff befinden.

13. Windstromgenerator nach einem der vorhergehenden Ansprüche, wobei der Windstromgenerator in mehreren von nach vorn/hinten und nach links/rechts gerichteten horizontalen Richtungen montiert ist und wobei die Turbinen (300) der entsprechenden Windstromgeneratoren elektrisch miteinander verbunden sind, so dass eine Leistung, welche durch die jeweilige Turbine (300) erzeugt wird, kombiniert wird.

14. Windstromgenerator nach Anspruch 13, wobei mehrere Träger vertikal an vorderen/hinteren und linken/rechten äußeren Abschnitten montiert sind und mit den Lagerabschnitten (20') der entsprechenden Windstromgeneratoren durch Drähte verbunden und an diesen befestigt sind.

## Revendications

1. Générateur d'énergie éolienne à pales d'éolienne variables comprenant :
une monture d'installation (10) installée sur le sol sous la forme d'une croix (+) et comportant un support d'arbre vertical rotatif dans sa partie centrale ;
un arbre vertical rotatif (20) installé de manière rotative et verticalement dans la partie centrale de la monture d'installation (10) ;
un roulement (20') dans lequel est insérée en rotation l'extrémité supérieure de l'arbre vertical rotatif (20) ;
des supports en forme de « [ » (30) reliés et fixés entre le roulement (20') et la monture d'installation (10),
une pluralité d'unités d'installation de pales internes (40) installées de manière fixe sur l'arbre vertical rotatif (20) à intervalles donnés dans la direction haut/bas ;
des tiges support (40') ayant des extrémités d'un côté fixées aux unités d'installation de pales internes (40) ;
une pluralité d'unités d'installation de pales externes (50) auxquelles sont fixées les extrémités externes des tiges support (40') ;
des pales d'éolienne (70) installées entre les unités d'installation de pales internes (40) et les unités d'installation de pales externes (50) ;
des tiges support verticales (60') faites d'un fil d'acier et reliant les unités d'installation de pales externes (50) de groupes de pales d'éolienne qui sont adjacentes dans la direction haut/bas ;
une pluralité de barres supports (60a) faites d'un fil d'acier et reliées entre la tige support la plus haute (40') et la tige support la plus basse (40') des pales d'éolienne (70) des groupes respectifs ;
des unités support (80) installées dans l'arbre vertical rotatif (20) entre les groupes de pales d'éolienne (70) et reliées aux supports en forme de « [ » (30) ;
un moyen de fixation de pales d'éolienne (90) installé sur l'arbre vertical rotatif (20) au-dessus des unités d'installation de pales internes (40) de façon à être mobile dans la direction haut/bas et limitant les déplacements des pales d'éolienne (70) ;
un dispositif de commande de moyen de fixation (100') ;
et **caractérisé en ce que** le générateur comprend en outre :
des bagues support (60) faites d'un fil d'acier et reliées aux unités d'installation de pales externe (50) sur le même plan ;
une pluralité de barres support diagonales (60b) reliées et fixées entre les unités d'installation de pales externes supérieures (50) et les unités d'installation de pales internes inférieures (40) des pales d'éolienne (70) du même groupe ;
une échelle (60c') fixée aux tiges support (40') des pales d'éolienne (70) de chaque groupe ;
une pluralité de moyens de génération d'énergie (300) pour effectuer une génération d'énergie ;
et un moyen d'augmentation de rendement de génération d'énergie (200) installé dans la partie centrale inférieure de la monture d'installation (10), la pluralité de moyens de génération d'énergie (300) étant installés sur la partie inférieure du moyen d'augmentation de rendement de génération d'énergie (200), le moyen d'augmentation de rendement de génération d'énergie (200) étant agencé pour modifier le nombre de moyens de génération d'énergie (300) en prise avec l'arbre vertical rotatif (20) en fonction de la force du vent ;
dans lequel les unités support (80) sont reliées aux supports en forme de « [ » par l'intermédiaire de fils (81) ;
le dispositif de commande de moyen de fixation (100') est installé du côté de l'extrémité inférieure de l'arbre vertical rotatif (20) ;
et dans lequel le moyen d'augmentation de rendement de génération d'énergie (200) comprend :
un moyen de commande de commutateur en forme de plaque circulaire (202) installé au niveau d'un arbre support, qui est installé verticalement et séparément adjacent à l'arbre vertical rotatif (20) par un support (201) ;
un gouvernail (203) relié au moyen de commande de commutateur (202) et installé sur celui-ci, dans lequel il tourne en fonction de la direction du vent pour recevoir la direction du vent frontalement ;
un commutateur (204) comportant une pale de réception de vent (204a) qui est installé au niveau de la partie inférieure du moyen de commande de commutateur (202) et activé ou désactivé en fonction de la force du vent ;
un engrenage d'entraînement (206) relié avec l'extrémité inférieure de l'arbre vertical rotatif (20) dans un boîtier (205) équipé sur la partie d'extrémité inférieure de l'arbre vertical rotatif (20) ;
un premier engrenage entraîné (207) en prise avec l'engrenage d'entraînement (206) ;
un deuxième et un troisième engrenage entraîné (208, 209) installés de manière adjacente à l'engrenage d'entraînement (206) et en prise avec l'engrenage d'entraînement (206) en fonction de la force du vent ; et
un compresseur d'air (210) pour pousser la totalité ou l'un quelconque parmi le premier jusqu'au troisième engrenage entraîné (207, 208, 209) vers l'engrenage d'entraînement (206) par l'intermédiaire des dispositifs d'actionnement linéaires respectifs en fonction de l'état des points de contact du commutateur de façon à être en prise avec l'engrenage d'entraînement (206), dans lequel le commutateur (204) comprend une pale de réception de vent (204a), un rouleau de contact côté droit (204b) en contact avec le bord circonférentiel externe droit du moyen de commande de commutateur (202), et un rouleau de contact côté gauche (204b') en contact avec le bord circonférentiel externe gauche du moyen de commande de commutateur (202), agencé de sorte que lorsque la force du vent devient la force constante, le bord circonférentiel externe droit du moyen de commande de commutateur (202) pousse le rouleau de contact droit (204b) et est commuté, et lorsque la force du vent devient plus grande, le bord circonférentiel externe gauche du moyen de commande de commutateur (202) pousse le rouleau de contact gauche (204b') et est commuté.

2. Générateur d'énergie éolienne selon la revendication 1, dans lequel chacune des unités d'installation de pales internes (40) est divisée en deux unités d'installation (40a, 40b), qui sont couplées l'une à l'autre par un boulon (41), les extrémités des tiges support (40') sont insérées dans l'unité d'installation de pales internes (40) dans la direction horizontale depuis les directions avant, arrière, gauche et droite, et fixées à celle-ci par un boulon (42) inséré vers le bas depuis la surface supérieure, les extrémités des arbres de pales rotatifs (71) sont insérées de manière rotative dans les unités d'installation de pales internes (40) sur le même plan que les tiges support (40'), les extrémités des arbres rotatifs (96) du moyen de fixation de pales d'éolienne (90') sont insérées de manière rotative dans les unités d'installation de pales internes (40) au-dessous des parties insérées des tiges support (40') et des arbres de pales rotatifs (71), les autres extrémités des tiges support (40') sont insérées et fixées dans les unités d'installation de pales externes (50), et les autres extrémités respectives des arbres de pales rotatifs (71) et les arbres rotatifs (96) sont insérés de manière rotative dans les unités d'installation de pales externes (50).

3. Générateur d'énergie éolienne selon la revendication 2, dans lequel les unités d'installation de pales internes (40) sont divisées en une structure dans laquelle le côté découpé de la partie centrale pour diviser en deux l'unité d'installation (40) est parallèle au côté externe et une structure dans laquelle le côté découpé pour diviser en deux l'unité d'installation (40) est diagonal et utilisé pour chaque groupe de pales d'éolienne.

4. Générateur d'énergie éolienne selon l'une quelconque des revendications précédentes, dans lequel chacune des pales d'éolienne (70) comprend :
un arbre de pale rotatif (71) installé de façon rotative entre l'unité d'installation de pales internes (40) et l'unité d'installation de pales externes (50) sur le même plan que la tige support (40') ;
une partie de pale (72) ayant un côté fixé à l'arbre de pale rotatif (71) ; et
un ressort de pale (73) inséré dans la partie centrale de l'arbre de pale rotatif (71) et maintenant la partie de pale (72) à 45 degrés par rapport à la surface horizontale pendant les périodes de non fonctionnement.

5. Générateur d'énergie éolienne selon la revendication 4, dans lequel les arbres de pale rotatifs (71) situés dans le même plan sont reliés à plusieurs barres support en fil d'acier (60c, 60d, 60f), plusieurs barres support en fil d'acier (60c) sont reliées et fixées entre la barre support (60) et également une barre support (60c) et une barre support (60d), et une barre support (60f) et une barre support (60) sont reliées entre elles.

6. Générateur d'énergie éolienne selon la revendication 4 ou 5, dans lequel les parties de pales (72) sont fabriquées dans un quelconque choisi dans le groupe constitué d'un plastique renforcé transparent ou opaque, de verre renforcé, d'un métal non-ferreux et de duralumin.

7. Générateur d'énergie éolienne selon l'une quelconque des revendications précédentes, dans lequel chacune des unités support (80) est divisée en deux corps support (80a, 80b), qui sont couplés l'un à l'autre par un boulon (82), des plaques support sont insérées dans les parties en projection circulaire inférieures (83) formées par le couplage des corps support (80a, 80b), chacune des plaques support est divisée en deux plaques support (84a, 84b) de sorte qu'une plaque support forme une structure articulée et l'autre plaque support est couplée à un boulon (86) par l'intermédiaire d'un support (85), les extrémités des fils (81) sont fixées aux quatre coins des plaques support couplées (84a, 84b) et les autres extrémités des fils (81) sont reliées et fixées aux supports en forme de « [ » (30).

8. Générateur d'énergie éolienne selon l'une quelconque des revendications précédentes, dans lequel chacun des moyens de fixation de pales d'éolienne (90') est divisé en deux unités mobiles (91a, 91b), qui sont couplées l'une à l'autre par un boulon (92) de sorte que les unités mobiles (91a, 91b) peuvent se déplacer dans la direction haut/bas, l'arbre vertical rotatif (20) étant inséré dans sa partie centrale, un arbre mobile (93) pour déplacer les unités mobiles (91a, 91b) dans la direction haut/bas est inséré et fixé entre deux unités mobiles (91a, 91b), les extrémités du levier rectiligne (94) sont respectivement fixées aux surfaces externes des deux unités mobiles couplées (91a, 91b), les extrémités des leviers en forme de « L » (95) sont reliées de façon rotative aux autres extrémités des leviers rectilignes (94), des arbres rotatifs (96) munis de ressorts (96a) sont insérées dans les autres extrémités des leviers en forme de « L » (95) et insérées de façon rotative dans les unités d'installation de pales internes (40), des broches de butée (95a) pour arrêter la rotation des leviers en forme de « L » (95) sont insérées et fixées dans les unités d'installation de pales internes (40) sur lesquelles sont situées les autres extrémités des leviers en forme de « L » (95), les ressorts (95a) ont les extrémités montées et fixées sur les tiges support (40') et les autres extrémités fixées sur les leviers en forme de « L » adjacents aux parties de raccordement des leviers rectilignes (94) et des leviers en forme de « L » (95), et une pluralité de leviers (97) sont fixés sur les arbres rotatifs (96) à intervalles donnés.

9. Générateur d'énergie éolienne selon la revendication 8, dans lequel les deux unités mobiles (91a, 91b) ont une structure dans laquelle le côté de découpage de la partie centrale pour diviser en deux l'unité mobile est parallèle au côté externe, deux unités mobiles (91a', 91b') ayant une structure dans laquelle le côté de découpage est diagonal sont également fournies, les unités mobiles (91a, 91b) de la structure parallèle sont utilisées pour un groupe de pales d'éolienne (70) et les unités mobiles (91a', 91b') de la structure diagonale sont utilisées pour l'autre groupe de pales d'éolienne (70).

10. Générateur d'énergie éolienne selon l'une quelconque des revendications précédentes, dans lequel le dispositif de commande de moyens de fixation (100') comprend :
un corps de boîte rectangulaire (101) ;
une plaque de fixation inférieure (102') fixée à la partie inférieure dans le corps de boîte rectangulaire (101');
une paire de rouleaux (103') installés du côté inférieur de la plaque de fixation inférieure (102') ;
des rouleaux inférieurs (104') installés à chaque coin côté inférieur de la plaque de fixation inférieure (102') ;
une plaque mobile inférieure (105') se déplaçant vers le haut et vers le bas dans le corps de boîte rectangulaire (101') ;
un ressort (106') inséré dans le centre côté supérieur de la plaque mobile inférieure (105') ;
une pluralité d'arbres mobiles (107') fixés verticalement au niveau du coin de la plaque mobile inférieure (105') ;
une plaque de fixation supérieure (108') fixée à la partie supérieure dans le corps de boîte rectangulaire (101') ;
des rouleaux supérieurs (109') installés à chaque coin côté inférieur de la plaque de fixation supérieure (108') ;
une plaque mobile supérieure (110') fixée à l'extrémité supérieure d'une pluralité d'arbres mobiles (107') ;
un moyen de corde (111') comprenant des cordes (111a à 111d) suspendant les rouleaux (103') et les rouleaux supérieur et inférieur (109', 104') ; et
un moteur (112') pour enrouler et dérouler le moyen de corde (111').

11. Générateur d'énergie éolienne selon la revendication 10, dans lequel le corps de boîte rectangulaire (101') comporte une gorge de guidage (101a) ayant des formes oblongues au niveau de ses parties supérieure et inférieure, formée sur un côté du corps rectangulaire, la plaque de fixation inférieure (102') est fixée à la partie inférieure du corps de boîte rectangulaire (101') par un support en forme de « ┐ », les rouleaux (103', 104') sont fixés sur la face inférieure de la plaque de fixation inférieure (102') par un support (b), l'extrémité inférieure de l'arbre mobile (107') est fixée au coin de la plaque mobile inférieure (105') par des écrous (c, c') et l'extrémité supérieure de l'arbre mobile (107') est fixée à la plaque mobile supérieure (110') par des écrous (c, c'), un élément de guidage (105a) comportant une protubérance de guidage (d) est fixé à l'extrémité latérale supérieure de la plaque mobile inférieure (105') et la protubérance de guidage (d) est insérée dans la gorge de guidage (101a), un boulon de fixation (c) est formé sur un côté de la plaque de fixation supérieure (108') et inséré et fixé dans un côté du corps de boîte rectangulaire (101') et un rouleau supérieur (109') est fixé sur le côté inférieur de la plaque de fixation supérieure (108') par un support (b).

12. Générateur d'énergie éolienne selon l'une quelconque des revendications précédentes, dans lequel le moyen de génération d'énergie (300) comprend des générateurs d'énergie (301, 302, 303) respectivement installés au niveau des parties inférieures du premier jusqu'au troisième engrenages entraînés (207, 208, 209) en prise avec l'engrenage d'entraînement (206).

13. Générateur d'énergie éolienne selon l'une quelconque des revendications précédentes, dans lequel le générateur d'énergie éolienne est installé en plusieurs exemplaires dans les directions horizontales avant/arrière et droite/gauche et les turbines (300) des générateurs d'énergie éolienne respectifs sont connectées électriquement entre elles, de sorte que l'énergie générée par chaque turbine (300) est combinée.

14. Générateur d'énergie éolienne selon la revendication 13, dans lequel une pluralité de poteaux sont installés verticalement sur les parties externes avant/arrière et gauche/droite, et reliés et fixés par des fils aux parties de roulement (20') des générateurs d'énergie éolienne respectifs.
